(19) **Europäisches Patentamt**
**European Patent Office**
**Office européen des brevets**

(11) **EP 2 173 049 B1**

(12) **EUROPEAN PATENT SPECIFICATION**

(45) Date of publication and mention of the grant of the patent:
**26.08.2015 Bulletin 2015/35**

(21) Application number: **08776727.3**

(22) Date of filing: **24.06.2008**

(51) Int Cl.:
*H04L 1/00* (2006.01)      *H04L 29/08* (2006.01)
*H04B 17/00* (2015.01)      *H04L 1/20* (2006.01)
*H04W 8/22* (2009.01)      *H04W 72/08* (2009.01)
*H04L 1/18* (2006.01)

(86) International application number:
**PCT/JP2008/001642**

(87) International publication number:
**WO 2009/001552 (31.12.2008 Gazette 2009/01)**

(54) **COMMUNICATION DEVICE, INTEGRATED CIRCUIT, TRANSMISSION RATE CONTROL METHOD, AND TRANSMISSION RATE CONTROL PROGRAM**

KOMMUNIKATIONSVORRICHTUNG, INTEGRIERTE SCHALTUNG, VERFAHREN ZUR STEUERUNG DER ÜBERTRAGUNGSRATE UND PROGRAMM ZUR STEUERUNG DER ÜBERTRAGUNGSRATE

DISPOSITIF DE COMMUNICATION, CIRCUIT INTÉGRÉ, ET MÉTHODE ET PROGRAMME DE RÉGULATION DE LA VITESSE DE TRANSMISSION

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **25.06.2007 JP 2007165800**

(43) Date of publication of application:
**07.04.2010 Bulletin 2010/14**

(73) Proprietor: **Panasonic Corporation**
**Kadoma-shi**
**Osaka 571-8501 (JP)**

(72) Inventors:
• **UKITA, Yosuke**
**Osaka 540-6207 (JP)**

• **OHTA, Kazuhiro**
**Osaka 540-6207 (JP)**
• **ANDO, Kazuhiro**
**Osaka 540-6207 (JP)**

(74) Representative: **Grünecker Patent- und Rechtsanwälte**
**PartG mbB**
**Leopoldstraße 4**
**80802 München (DE)**

(56) References cited:
**EP-A2- 0 899 906      WO-A1-01/08369**
**WO-A1-2006/085801      WO-A2-03/019844**
**JP-A- 2003 318 861      JP-A- 2004 064 797**
**US-A1- 2003 156 634      US-A1- 2006 114 858**
**US-A1- 2007 053 287**

**Description**

The present invention relates to an art for selecting a transmission rate from a plurality of transmission rates to transmit and to receive a packet signal at the selected transmission rate.

In wireless transmission using a wireless LAN (Local Area Network) according to the IEEE (Institute of Electrical and Electronics Engineers) 802.11 standard, a receiver may not be able to receive data appropriately (i.e. a packet error may occur) due to any of a number of reasons, such as channel noise, fading caused by multi-path channels of a direct radio wave and a reflected wave, thermal noise of a circuit board, radio wave interference from other wireless systems. In addition, in wired transmission, including PLC (Power Line Communication), a packet error may occur as a result of noise generated from electrical appliances and so on which are connected to wires.

It can be thought that one of the methods for reducing the packet error is to select a more suitable transmission rate to perform transmission.

The IEEE 802.11a standard defines eight transmission rates of 54 Mbps (Mega bit per second), 48 Mbps, 36 Mbps, 24 Mbps, 18 Mbps, 12 Mbps, 9 Mbps, and 6 Mbps, by combining one of four modulation schemes of 64 QAM (Quadrature Amplitude Modulate), 16 QAM, QPSK (Quadrature Phase Shift Keying), BPSK (Binary Phase Shift Keying) and one of three encoding ratios of 3/4, 2/3, 1/2. According to the IEEE 802.11n Draft 2.0, transmission rates are defined by combining each one of four modulation schemes of 64 QAM, 16 QAM, QPSK, BPSK, two guard interval lengths of 800 nanoseconds, 400 nanoseconds, two frequency bandwidths of 20 MHz, 40 MHz, and four spacial streams of 1 stream, 2 streams, 3 streams, 4 streams, respectively. A transmission rate set by a part of or all of the modulation scheme, encoding ratio, guard interval length, frequency bandwidth, number of spacial streams in a physical layer, is called a PHY rate.

The lower the PHY rate, the more a packet error rate(referred to below as a PER) can be reduced. Accordingly, in an environment with a significant PER, it is preferable to perform transmission at a lower PHY rate.

Nevertheless, when transmission is performed at a lower PHY rate, its transmission throughput becomes low and its frequency band becomes occupied for a long period of time, therefore resulting in a problem that the effective use of limited frequency resources is impaired.

Moreover, a channel environment changes from moment to moment. For example, a wireless channel between a wireless access point (referred to below as an AP) and a wireless station (referred to below as an STA) varies with a number of factors, such as people passing across, presence of obstacles, and displacement of the STA.

Thus, it is important to select a PHY rate appropriately in order to secure the transmission throughput while minimizing the PER. Patent Document 1 identified below discloses one of such methods for selecting the PHY rate.

A wireless communication device of Patent Document 1 holds a relational expression between a reception level and a PER for each PHY rate. The wireless communication device detects the reception level of a received signal and selects the fastest PHY rate among those whose PERs are less than or equal to a predetermined threshold value, based on the relational expression. Provided that the selected PHY rate will be the upper limit of the PHY rate at which a signal is transmitted to a device that transmitted the received signal, the wireless communication device calculates PERs for most recent N times of transmissions from the transmission results. Then, according to the calculation results, the wireless communication device executes control for lowering or raising a PHY rate.

This makes it possible to set a PHY rate in accordance with a channel environment, and accordingly to prevent deterioration of communication quality while suppressing packet errors.

A further example for scheduling further data transmission to a receiver in response to quality feedback from the receiver is disclosed in Patent Document 2.

Patent Document 1: Japanese patent application publication No. 2005-244598
Patent Document 2: WO 2006/085801

Meanwhile, the wireless communication device in Patent Document 1 measures reception levels when receiving signals addressed to the own device. Given that the wireless communication device is an AP or an STA, in case the AP is connected with a number of STAs, it becomes less frequent for the AP to communicate with one of the STAs, since the AP must communicate with each STA. As a result, it becomes less frequent for the AP to determine the PHY rate of a signal to be transmitted to one of the STAs, and for each of the STAs to determine the PHY rate of a signal to be transmitted to the AP.

So, PHY rate setting cannot cope with the rapid changes in channel characteristics that may happen due to various factors, such as displacement of the STAs, which may lead to a problem that the AP and the STAs cannot communicate at appropriate PHY rates.

In view of the above drawbacks, the object of the present invention is to provide a transmission device which determines PHY rates more appropriately than before, according to the channel characteristics changes, to perform transmission.

This is achieved by the features of the independent claims.

The above aspect allows the communication device to acquire reception quality with which the first communication terminal received a signal, which was addressed to the second communication terminal by the communication device. Since the communication device is able to obtain information about the reception quality, which was unmeasureable in prior art when the first communication terminal receives signals addressed to the second communication terminal, it becomes possible to raise transmission rate setting frequency. Therefore, the present invention realizes transmission at transmission rates more appropriate than the prior art, in response to fast fluctuations in channel environments.

Fig. 1 shows a network configuration in Embodiment 1.

Fig. 2 shows that an STA 200b is also able to receive a signal addressed to an STA 200a.

Fig. 3 shows that the STA 200a is also able to receive a signal addressed to the STA 200b.

Fig. 4 is a functional block diagram showing a functional structure of an AP 100.

Fig. 5 is a functional block diagram showing a functional structure of the STAs 200a, 200b.

Fig. 6 is a graph showing information about propagation characteristics.

Fig. 7 is a data conceptual diagram showing an example of a data configuration of a state notice frame in Embodiment 1.

Fig. 8 is a PHY rate table stored in the AP 100.

Fig. 9 is an operation sequence showing communications among the AP 100, the STA 200a, and the STA 200b in Embodiment 1.

Fig. 10 is a flowchart showing operations of the AP 100 when receiving the state information frame.

Fig. 11 is a flowchart showing operations of the STAs 200a, 200b when receiving a packet signal.

Fig. 12 shows a network configuration in Embodiment 2.

Fig. 13 is a functional block diagram showing a functional structure of an AP 300.

Fig. 14 is a functional block diagram showing a functional structure of STAs 400a, 400b.

Fig. 15 is a data conceptual diagram showing an example of a data configuration of a state notice frame in Embodiment 2.

Fig. 16 shows that the information about propagation characteristics is corrected.

Fig. 17 is an operation sequence showing communications among the AP 300, the STA 400a, and the STA 400b in Embodiment 2.

Fig. 18 is a flowchart showing operations of the AP 300 when receiving the state notice frame.

Fig. 19 shows a network configuration in Embodiment 3.

Fig. 20 is a functional block diagram showing a functional structure of an AP 500.

Fig. 21 is a graph showing a relation between retransmission rates and PERs.

Fig. 22 is a graph showing a relation among effective velocities, reception strengths, and transmission rates.

Fig. 23 is a flowchart showing operations of the AP 500 in Embodiment 3.

100, 300, 500: AP
200a, 200b, 400a, 400b, 600a, 600b: STA
101, 201: RF processing unit
102, 202: PHY layer processing unit
103, 203: MAC layer processing unit
104, 204: upper layer processing unit
108, 335: state notice analyzing unit
109: propagation characteristics storing unit
110, 210: antenna
112, 502: PHY rate determining unit
205: reception level acquiring unit
206: other-station-addressed frame analyzing unit
207, 432: state notice frame creating unit
336: correction processing unit
433: PHY rate acquiring unit
434: PER calculating unit
501: throughput estimating unit

One aspect of the present invention is a first communication device that communicates with a first communication terminal and a second communication terminal comprises: a transmitting unit operable to transmit a signal; a receiving unit operable to receive, from the first communication terminal, a control signal including reception quality information, the reception quality information showing a reception quality pertaining to a time when the first communication terminal received a signal which was transmitted from the transmitting unit to the second communication terminal; and a transmission rate controlling unit operable to determine one transmission rate from among a plurality of transmission rates for a signal which is to be transmitted to the first communication terminal, in accordance with the reception quality information, wherein the transmitting unit transmits a signal to the first communication terminal at the determined transmission rate.

This allows the first communication device to acquire reception quality with which the first communication terminal received signal, which was addressed to the second communication terminal by the communication device. Since the communication device is able to obtain information about the reception quality, which was unmeasureable in prior art when the first communication terminal receives signals addressed to the second communication terminal, it becomes possible to raise transmission rate setting frequency. Therefore, the present invention realizes transmission at transmission rates more appropriate than the prior art, in response to fast fluctuations in channel environments.

In the aspect of the first communication device, a second communication device which is another aspect of the present invention further comprises a propagation characteristics holding unit operable to hold propagation characteristics information, the propagation characteristics information showing a relation between a reception quality and a signal error rate with respect to each of the plurality of transmission rates, wherein the transmission rate controlling unit includes a transmission rate determining unit operable to determine a transmission rate for a signal which is to be transmitted to the first communication terminal, in accordance with (i) the propagation characteristics information and (ii) the reception quality contained in the reception quality information received by the receiving unit, such that the determined transmission rate is fastest among all transmission rates at which each signal error rate is less than or equal to a predetermined threshold value.

This allows the second communication device to select an optimal transmission rate, by determining a transmission rate, such that it is fastest among transmission rates at which each signal error rate is less than or equal to a predetermined value.

In the aspect of the second communication device, a third communication device which is yet another aspect of the present invention may be obtained in which the control signal further includes signal error rate information, the signal error rate information showing a signal error rate pertaining to a time when the first communication terminal received a signal which was transmitted to the second communication terminal, the transmission rate controlling unit further includes a propagation characteristics correcting unit operable to correct the propagation characteristics information, in accordance with (i) the reception quality information and (ii) the signal error rate information, both contained in the control signal received by the receiving unit, and the transmission rate determining unit determines a transmission rate for a signal which is to be transmitted to the first communication terminal, in accordance with (i) reception quality information contained in a control signal which is newly received by the receiving unit and (ii) the corrected propagation characteristics information.

This allows the third communication device to correct the propagation characteristics it holds. Correction of the propagation characteristics has been conventionally performed, but with the increased frequency of correcting them, the device is able to determine transmission rates more appropriately than before.

In the aspect of the first communication device, a fourth communication device further comprises a propagation characteristics information holding unit operable to hold

(i) a propagation characteristics, the propagation characteristics showing a relation between the reception quality and a signal error rate with respect to each of the plurality of transmission rates, and
(ii) retransmission rate information, the retransmission rate information showing a relation between the signal error rate and a retransmission rate, wherein the transmission rate controlling unit includes (a) an effective transmission velocity estimating unit operable to estimate an effective transmission velocity when each of the plurality of transmission rates is used respectively, in accordance with (i) the reception quality information, (ii) the propagation characteristics information, and (iii) the retransmission rate information, and (b) a transmission rate determining unit operable to determine a transmission rate for a signal which is to be transmitted to the first communication terminal, such that the estimated effective transmission velocity becomes fastest at the determined transmission rate.

This allows the fourth communication device to estimate effective velocities for respective transmission rates, to determine a transmission rate which will be used for transmission. With the increased frequency of determining transmission rates for one of the communication terminals, the device is able to perform transmission at a transmission rate more appropriate than before.

In the aspect of the fourth communication device, a fifth communication device which is yet another aspect of the present invention may be obtained in which the effective transmission velocity estimating unit estimates a signal error rate with respect to each of the plurality of transmission rates respectively, by using a combination of the reception quality information and the propagation characteristics information, estimates a retransmission rate with respect to each of the plurality of transmission rates respectively, from the signal error rate which was estimated with respect to each of the plurality of transmission rates, and estimates an effective transmission velocity with respect to each of the plurality of transmission rates respectively, from the retransmission rate which was estimated with respect to the each of the plurality of transmission rates.

This allows the fifth communication device to calculate effective velocities from re-transmission rates. The relation between re-transmission rates and effective velocities has been conventionally acknowledged, and using this, the device is able to calculate effective velocities that are reliable.

In the aspect of the fourth communication device, a sixth communication device which is yet another aspect of the present invention may be obtained in which the control signal further includes signal error rate information, the signal error rate information showing a signal error rate pertaining to a time when the first communication terminal received a signal which was transmitted to the second communication terminal, the transmission rate controlling unit further includes, a propagation characteristics correcting unit operable to correct the propagation characteristics, by using a combination of the reception quality information and the signal error rate information, wherein the effective transmission velocity estimating unit estimates an effective transmission velocity when each of the plurality of transmission rates is used respectively, by using a combination of the reception quality information and the propagation characteristics information.

In the aspect of the sixth communication device, a seventh communication device which is yet another aspect of the present invention may be obtained in which the propagation characteristics correcting unit calculates an approximate line from (i) an actual measurement point obtained by the measured reception quality level and the measured signal error rate, and (ii) a plurality of sampling points on a formula of the current propagation characteristics, and updates the current propagation characteristics by the calculated approximate line with use of the method of least squares.

This allows the sixth or the seventh communication devices to correct the propagation characteristics that they hold. Correction of the propagation characteristics has been conventionally performed, but with the increased frequency of correcting them, the devices are able to determine transmission rates more appropriately than before.

In the aspects of the third or sixth communication devices, an eighth communication device which is yet another aspect of the present invention may be obtained in which the propagation characteristics correcting unit corrects the propagation characteristics of a transmission rate which is to be used for transmission to the first communication terminal, the transmission rate corresponding to the transmission rate used for transmission to the second communication terminal.

This allows to correct the propagation characteristics information which will be used for determination of a transmission rate of a signal that is to be transmitted to the second communication terminal, the information having been obtained from a transmission rate of a signal which was transmitted to the second communication terminal. Accordingly, it becomes possible to determine a transmission rate for transmission more appropriately, based on the corrected propagation characteristics information of transmission rates.

In the aspect of the first communication device, a ninth communication device which is another aspect of the present invention further comprises a second receiving unit operable to receive a signal which was transmitted from the first communication terminal to the second communication terminal, wherein the transmission rate controlling unit determines a transmission rate for a signal which is to be transmitted to the first communication terminal, in accordance with the signal received by the second receiving unit.

This allows the ninth communication device to receive a signal which was addressed to the second communication terminal from the first communication terminal. Accordingly, it becomes possible to determine transmission rates appropriate to channel environments between the first communication terminal and the communication device, and also raise the determination frequency of transmission rates.

Description about the communication device, which is an embodiment of the present application, will now be made below with reference to Figures.

**[Embodiment 1]**

<Summary>

Conventionally, an STA measured reception intensity only upon receiving a signal addressed to the own station. In contrast, in the present invention, an STA also measures reception intensity on receiving a signal addressed to another station and notifies it to an AP. Accordingly, the present invention raises determination frequency of PHY rates, and makes it possible to determine PHY rates according to the channel environment changes as far as possible.

<Configuration>

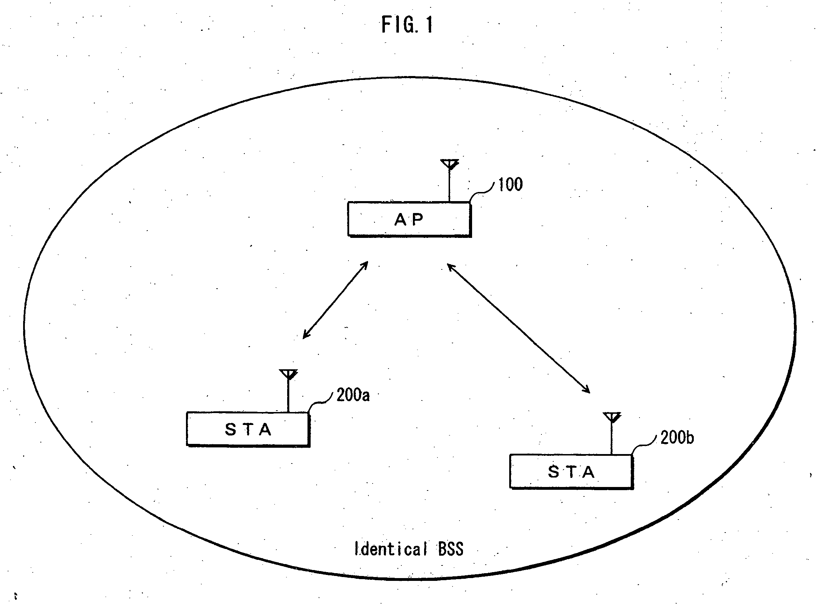

Fig. 1 is a network configuration diagram showing a system configuration in which communication devices are included. As shown in Fig. 1, an AP (Access Point) 100, an STA (Station) 200a, and an STA 200b are included within an identical BSS (Basic Service Set). One of the above-mentioned communication devices corresponds to the AP 100, and the first and second communication terminals correspond to the STA 200a, 200b. The AP 100 comprises a standard feature of an access point, and the STA 200a, 200b comprise a standard feature of a wireless communication device.

As is not shown in Figure 1, assumed is a usage pattern in which the AP 100 is connected, for example, to a video streaming server and the like to transmit video data to the STAs 200a, 200b without wires, while the STAs 200a, 200b are, for example, connected to televisions to display the received video, or built into PCs (Personal Computers) to display the received video on monitors of the PCs.

Conventionally, it was only upon receiving signals addressed to the own stations that the STAs 200a, 200b measure reception intensity and notify the AP 100 of the measured reception intensity, so that the AP 100 may determine PHY rates based on the notified information.

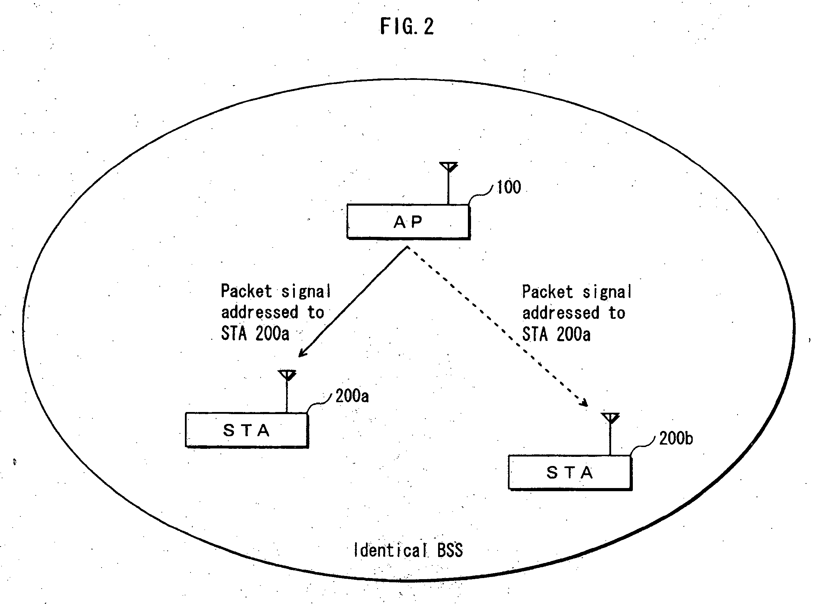

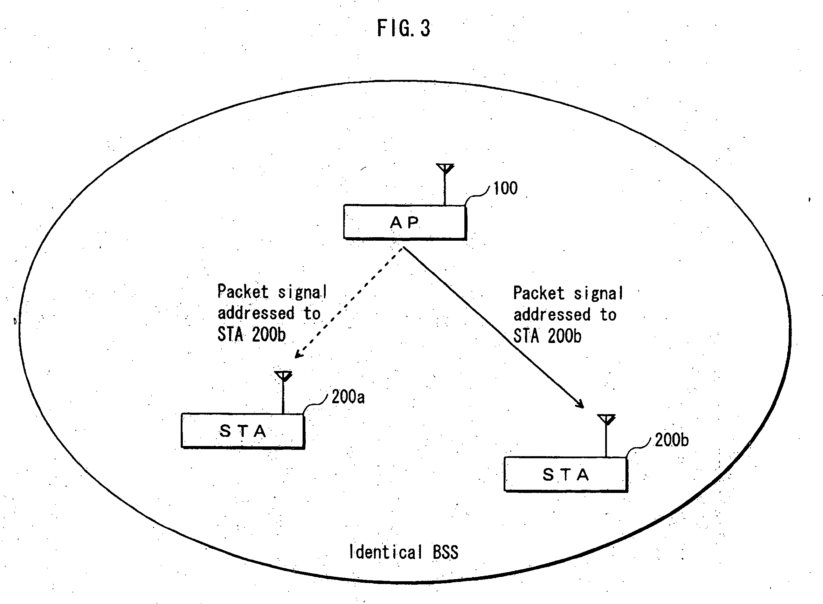

However, it is basically possible for the STA 200b to receive signals addressed to the STA 200a, as shown in Fig. 2, or for the STA 200a to receive signals addressed to the STA 200b, as shown in Fig. 3. Thus, the present embodiment is characterized in that the STAs also measure reception intensity upon receiving signals addressed to the other station to notify the AP 100, so as to improve the update frequency of PHY (physical) rates.

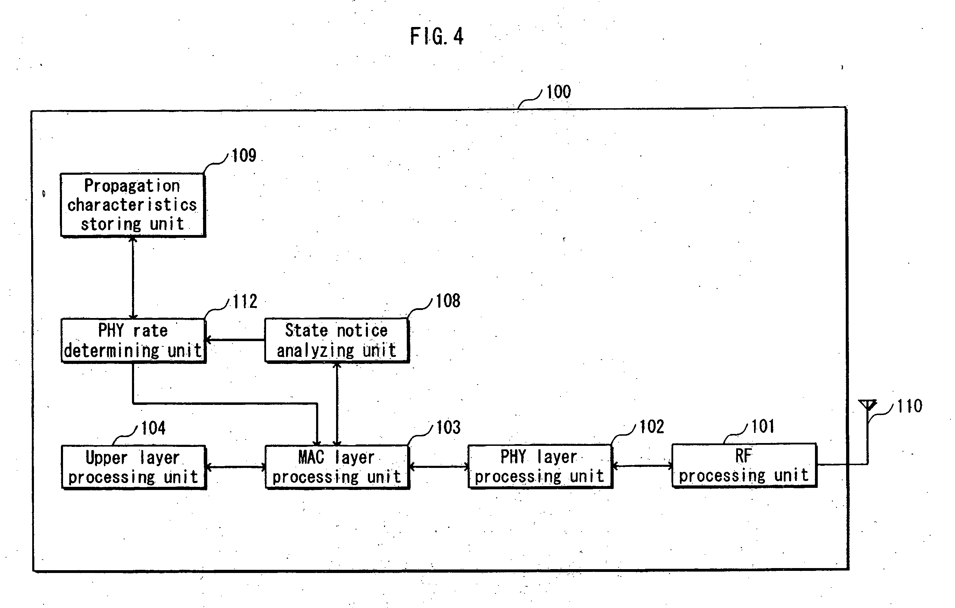

Description about the AP 100 will now be made below with reference to Fig. 4.

Fig. 4 is a functional block diagram showing a functional structure of the AP 100. As shown in Fig. 4, the AP 100 includes an RF (Radio Frequency) processing unit 101, a PHY layer processing unit 102, a MAC (Media Access Control) layer processing unit 103, an upper layer processing unit 104, a state notice analyzing unit 108, a propagation characteristics storing unit 109, and a PHY rate determining unit 112.

The RF processing unit 101 includes functions of executing high-frequency processing, and transmitting/receiving packet signals via an antenna 110.

The PHY layer processing unit 102 includes functions of modulating/demodulating packet signals according to the IEEE 802.11 standard. Modulated packet signals are conveyed to the RF processing unit 101, and demodulated packet signals are conveyed to the MAC layer processing unit 103.

The MAC processing unit 103 includes functions of media access control, such as DCF (Distributed Coordination Function) and HCCA (HCF Controlled Channel Access), radio band control, as well as authentication and association defined by the IEEE 802.11 standard. The MAC layer processing unit 103 also holds a PHY rate table 800, with which it functions to select transmission rates for transmitting packet signals to respective STAs and to transmit packet signals at the selected rates.

The upper layer processing unit 104 includes functions of decoding MPEG-TS signals, MPEG-4 AVC/H. 264 signals and the like, generating/analyzing VoIP (Voice over Internet Protocol) signals, and executing various applications.

The state notice analyzing unit 108 analyzes a state notice frame transmitted from STAs 200a or 200b, so as to extract "identification information", a "reception identification flag", an "SA (Source Address)", a "DA (Destination Address)", and an "RSSI" contained in the state notice frame. The state notice frame will later be described in details.

The propagation characteristics storing unit 109 includes a function of holding a relational expression showing a relation of RSSI to PER characteristics for each PHY rate. The relational expression is called propagation characteristics information.

The PHY rate determining unit 112 has functions of reading out propagation characteristics information from the propagation characteristics storing unit 109, determining, based on an RSSI and an SA conveyed from the state frame analyzing unit 108, a PHY rate for transmitting a signal to the STA which was assigned by the SA, and conveying the determined PHY rate to the MAC layer processing unit 103.

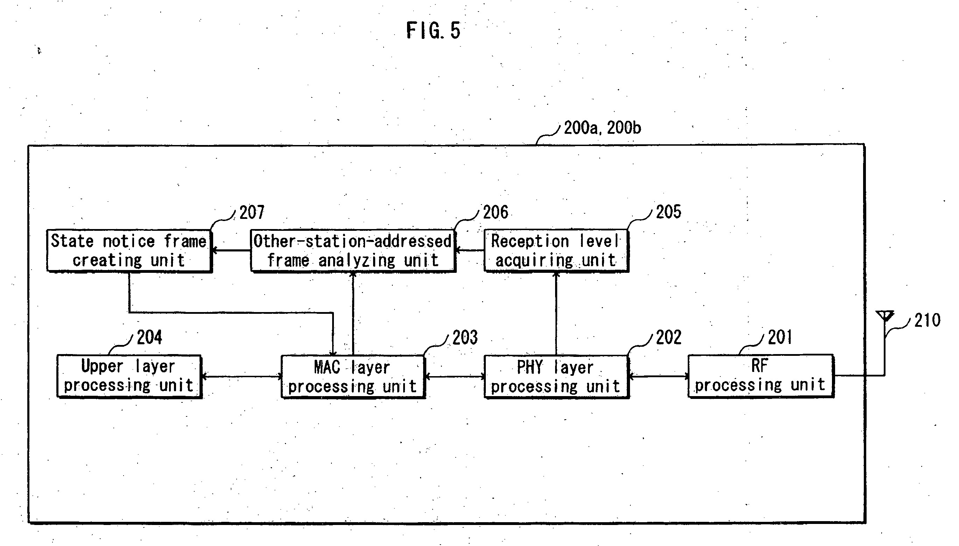

Now, description will be made on the STAs 200a, 200b, with reference to Fig. 5. Fig. 5 is a functional block diagram showing a functional structure of the STAs 200a, 200b. The STAs 200a, 200b basically include an identical structure, so in the description herein, the STA 200a serves as a subject.

As shown in Fig. 5, the STA 200a includes an RF processing unit 201, a PHY layer processing unit 202, a MAC layer processing unit 203, an upper layer processing unit 204, a reception level acquiring unit 205, an other-station-addressed frame analyzing unit 206, and a state notice frame creating unit 207.

The RF processing unit 201 has functions of executing radio frequency processing, and transmitting/receiving packet signals via an antenna 210.

The PHY processing unit 202 has functions of modulating/demodulating packet signals according to the IEEE 802.11 standard. Modulated packet signals are conveyed to the RF processing unit 201, and demodulated packet signals are conveyed to the MAC layer processing unit 203.

The MAC layer processing unit 203 includes functions of media access control, such as DCF (Distributed Coordination Function) and HCCA (HCF Controlled Channel Access), and radio band control, as well as authentication and association defmed by the IEEE 802.11 standard.

The upper layer processing unit 204 includes functions of decoding MPEG-TS signals, MPEG-4 AVC/H. 264 signals and the like, generating/analyzing VoIP (Voice over Internet Protocol) signals, and executing various applications.

The reception level acquiring unit 205 has functions of acquiring an RSSI which was measured on reception of a packet signal, and conveying the acquired RSSI to the state notice frame creating unit 207 via the other-station-addressed frame analyzing unit 206.

The other-station-addressed frame analyzing unit 206 has a function of analyzing address information within a MAC header of a received packet, without deleting the received packet signal, regardless of whether it was addressed to the own station or the other station. The other-station-addressed frame analyzing unit 206 has a function of conveying, to the state notice frame creating unit 207, information indicating whether the received signal was addressed to the own station or the other station, as well as the RSSI conveyed from the reception level acquiring unit 205.

The state notice frame creating unit 207 has a function of creating a state notice frame containing an "SA", a "DA", and an "RSSI". The state notice frame creating unit 207 also has a function of conveying the created state notice frames to the MAC layer processing unit 203. In the state notice frame created by the state notice creating unit 207, "identification information" indicates that the frame is a state notice frame, and an "SA" is the own MAC address and a "DA" is the MAC address of the AP 100. In addition, the "reception identification flag" has a value in accordance with whether the signal conveyed from the other-station-addressed frame analyzing unit 206 was addressed to the own station or the other station.

We have described on the functional structures of the AP 100 and the STAs 100 a, 200b.

<Data>

Now, description will be made on each data in the present embodiment.

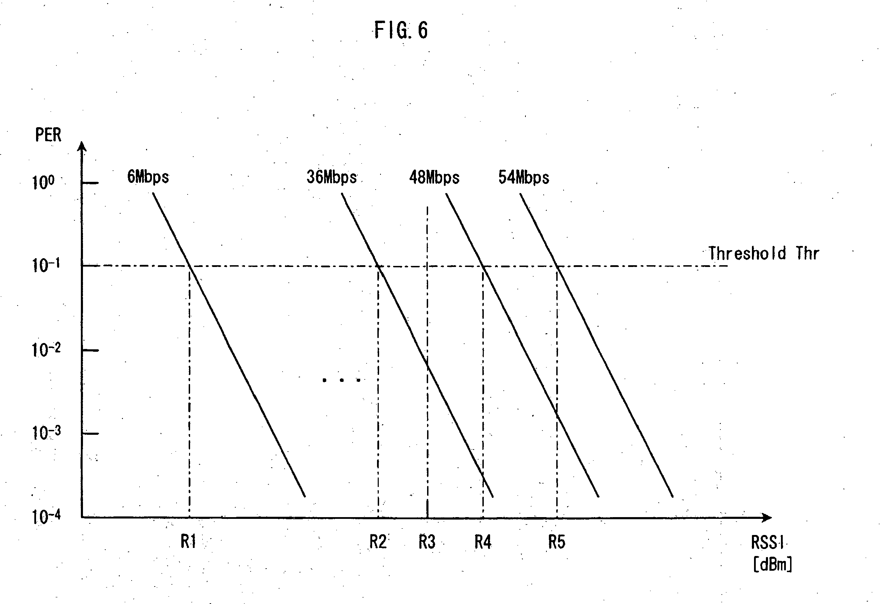

Firstly, description will be made on the propagation characteristics information stored in the propagation characteristics storing unit 108, with reference to Fig. 6.

The propagation characteristics information shows a relation between a PER and an RSSI for respective PHY rates, and is shown in the form of a graph in Fig. 6. In the graph of Fig. 6, the axes of abscissa and ordinate represent the RSSI and the PER respectively, showing the relation between them at each of the rates (6 Mbps,..., 36 Mbps, 48 Mbps, 54 Mbps).

As can be seen from Fig. 6, given that packet signals are received in the same RSSI condition, the lower the PHY rate the lower the PER.

Based on a threshold PER value which is predetermined for the acquired RSSI, the PHY rate determining unit 112 determines a transmission rate at which the PER is less than or equal to the threshold. For example, given that a threshold value (referred to below as Thr) is 10E-1 (= 10%), minimum RSSIs required for Thrs, at the PHY rates of 6 Mbps, 36 Mbps, 48 Mbps, 54 Mbps, are R1, R2, R4, and R5, respectively. It is assumed that the RSSI notified from a STA is R3. Since R3 satisfies R2 < R3 < R4, as shown in Fig. 6, the PHY rate determining unit 112 sets a transmission PHY rate to 36 Mbps. In addition, Thrs can vary depending on data contents which are subject for transmission in the system, and can be predetermined by, for example, an operator of the AP.

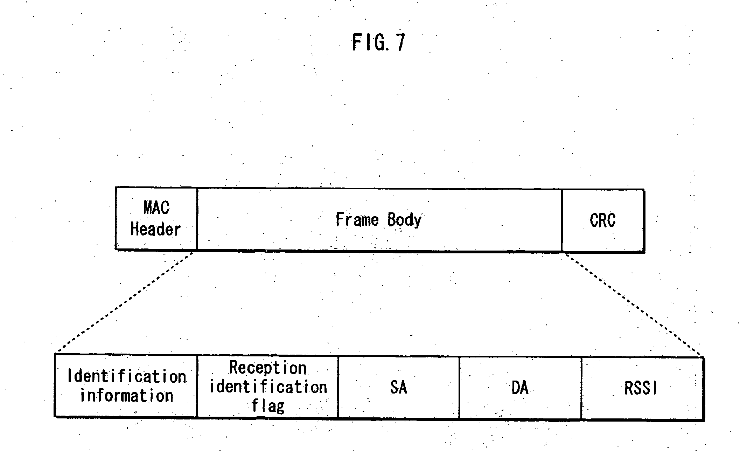

Now, description will be made on a state notice frame with reference to Fig. 7. The state notice frame herein is a frame unique to the present invention, and its packet signal comprises a "MAC header", a "frame body", and a "CRC".

The "MAC header" indicates a destination Mac address.

The "frame body" contains substantial information in the state notice frame. The "frame body" comprises an "identification information", a "reception identification flag", an "SA (Source Address)", a "DA (Destination Address)", and an "RSSI".

The "identification information" shows that the packet signal is a state notice frame. By means of the "identification information", the AP 100 acknowledges that a received signal is a state notice frame, which enables the AP to execute PHY rate determination processing.

The "reception identification flag" shows a destination address of a signal when an STA measured the RSSI for the signal. When the "reception notification flag" has a value of "0", it indicates that the STA measured the RSSI on receiving the signal addressed to the own station. When the "reception notification flag" has a value of "1", it indicates that the STA measured the RSSI on receiving the signal addressed to the other station. When the "reception notification flag" has a value of "2", the RSSI was measured without relation to the destination address of the signal.

The "SA" contains information about the STA which created and sent the state notice frame, and is a source MAC address. The "SA" herein is a MAC address of the STA.

The "DA" contains information about which device the state notice frame was addressed to, and is a destination MAC address. The "DA" herein is a MAC address of the AP 100.

By means of the "SA" and "DA", the AP 100 is able to acknowledge the channel between the AP and one of the STAs on which the RSSI was measured.

The "RSSI" contains information about a received signal strength which was measured.

The "CRC" contains information about whether data change has occurred in the transmitted signal due to influences of channel environments.

We have described on the state notice frame.

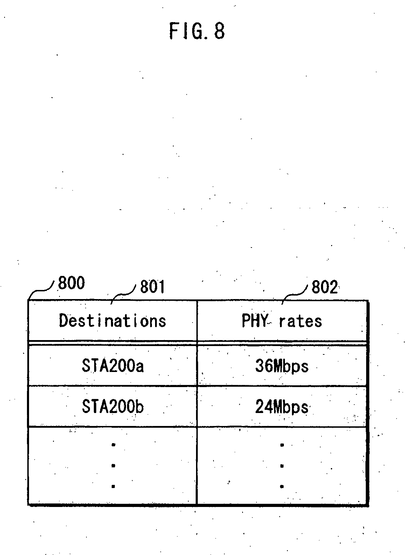

Now, description will be made on a PHY rate table 800 with reference to Fig. 8. Fig. 8 is a conceptual diagram of a PHY rate data table.

The PHY rate table 800 is information for the AP to hold and store determined PHY rates. The information is stored in the PHY rate determining unit 112 and updated.

As shown in Fig. 8, the PHY rate table 800 shows information about the stored PHY rates 802 which are used for transmitting packet signals to respective STAs, in accordance with destinations 801, which are identification information showing respective STAs under administration of the AP 100.

Referring to the PHY rate table 800, the AP transmits signals to the respective STAs.

<Operations>

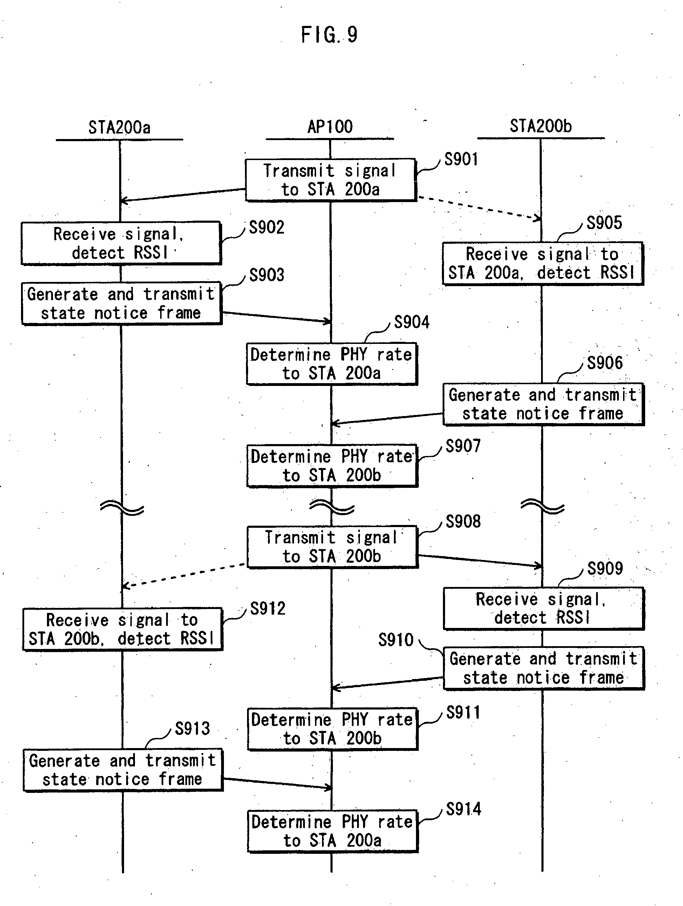

Now, description will be made on operations of the AP and the STAs in Embodiment 1, with reference to Figs. 9 to 11.

Fig. 9 shows an operation sequence showing communications among the AP 100, the STA 200a, and the STA 200b.

The AP 100 transmits a packet signal addressed to the STA 200a (step S901). The signal addressed to the STA 200a means that a MAC address indicated by a MAC header of the signal is STA 200a.

The STA 200a receives the packet signal addressed to the own station and measures an RSSI (step S902). Then, it creates a state notice frame including information of the measured RSSI, and transmits it to the AP 100 (step S903).

The AP 100 receives the state notice frame from the STA 200a, determines, based on the RSSI in the state notice frame, a PHY rate for subsequent transmission of a packet signal to the STA 200a, and updates the PHY rate (step S904).

On the other hand, the STA 200b also receives the signal addressed to the STA 200a, and measures an RSSI (step S905). The STA 200b creates a state notice frame including information of the measured RSSI, and sends it to the AP 100 (step S906).

The AP 100 receives the state notice frame from the STA 200b, determines, based on the RSSI in the state notice frame, a PHY rate for subsequent transmission of a packet signal to the STA 200b, and updates the PHY rate (step S907).

The AP 100 transmits a packet signal to the STA 200b (step 908).

The STA 200b receives the packet signal addressed to the own station and measures an RSSI (step S909). Then, it creates a state notice frame including information of the measured RSSI, and sends it to the AP 100 (step S910).

The AP 100 receives the state notice frame from the STA 200b, determines, based on the RSSI in the state notice frame, a PHY rate for subsequent transmission of a packet signal to the STA 200b, and updates the PHY rate (step S911).

On the other hand, the STA 200a also receives the signal addressed to the STA 200b, and measures an RSSI (step S912). The STA 200a creates a state notice frame including information of the measured RSSI, and sends it to the AP 100 (step S913).

The AP 100 receives the state notice frame from the STA 200a, determines, based on the RSSI in the state notice frame, a PHY rate for subsequent transmissions of packet signals to the STA 200a, and updates the PHY rate (step S914).

As can be seen from the operation sequence of Fig. 9, each STA measures an RSSI upon receiving a signal not addressed to the own station, and notify the AP of the RSSI. Since the AP determines and updates the PHY rate based on the notified RSSI, PHY rate updating frequency improves than before.

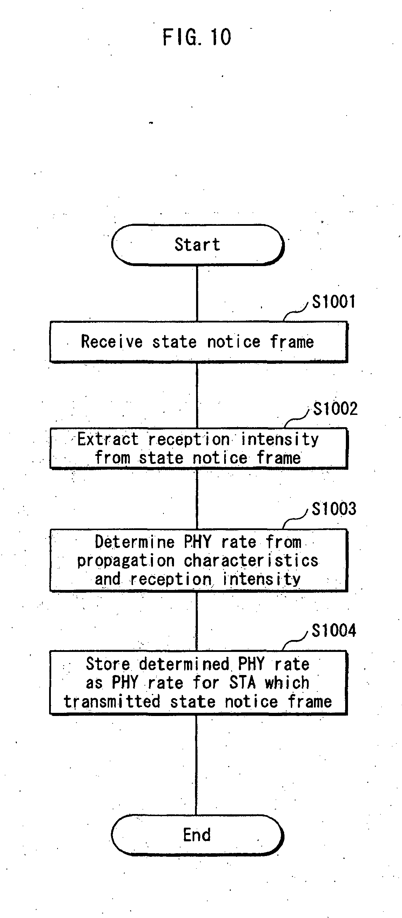

Now, description will be made on operations of the AP 100 when receiving a state information frame, with reference to a flowchart of Fig. 10.

The RF processing unit 101 of the AP 100 receives a packet signal, which is a state notice frame, via the antenna 110 (step S1001). The RF processing unit 101 conveys the received signal to the PHY layer processing unit 102.

The PHY layer processing unit 102 demodulates the signal conveyed from the RF processing unit 101, and conveys the demodulated signal to the MAC layer processing unit 103.

The MAC layer processing unit 103 analyzes the content of the signal conveyed from the PHY layer processing unit 102. The MAC layer processing unit 103 also acknowledges that, from a "reception identification flag" in the signal, the signal is a state notice frame, and conveys the state notice frame to the state notice analyzing unit.

The state notice analyzing unit 108 analyzes the received state notice frame. Based on an "SA" and a "DA" in the state notice frame, the state notice analyzing unit 108 selects a channel between the AP and one of the STAs which is to be a target for the PHY rate determination. Then, the state notice analyzing unit 108 conveys information about the selected channel to the PHY rate determining unit 112. At the same time, state notice analyzing unit 108 also extracts an RSSI in the state notice frame (Step S 1002), and conveys the RSSI to the PHY rate determining unit 112.

The PHY rate determining unit 112 reads out the propagation characteristics information from the propagation characteristics storing unit 109, and determines an appropriate PHY rate, based on the received RSSI value (Step S1003). Then, the PHY rate determining unit 112 conveys the information about the channel between the AP and one of the STAs, which was received from the state notice analyzing unit 108, and the determined PHY rate to the MAC layer processing unit 103.

The MAC layer processing unit 103 updates, based on the received information about the channel between the AP and one of the STAs and the determined PHY rate, the PHY rate table 800. The MAC layer processing unit 103 determines transmission rates for transmitting signals to respective stations as needed, based on the updated PHY rate table 800.

We have looked at the flow for PHY rate updating in the AP 100.

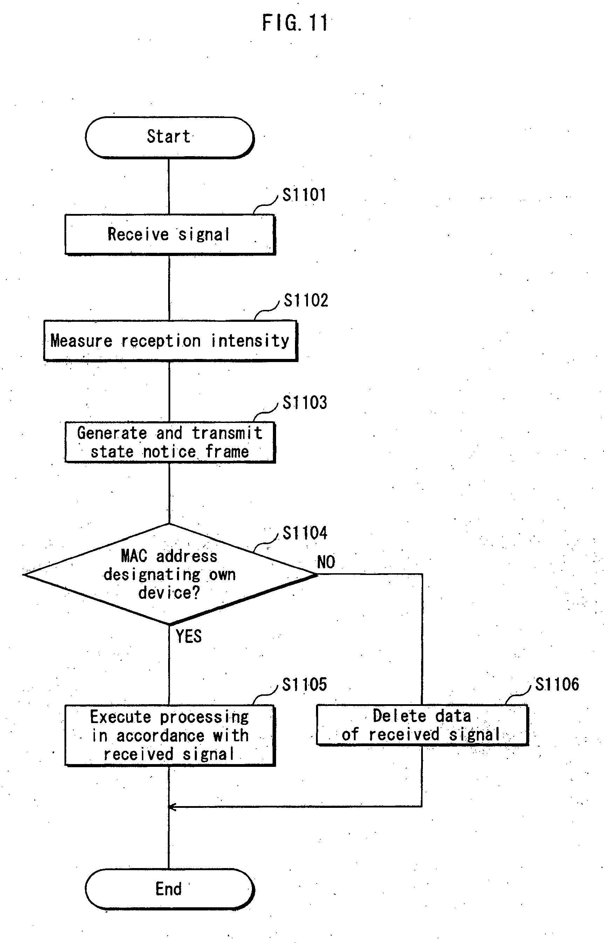

Now, description will be made on operations of the STAs 200a, 200b when receiving a packet signal, with reference to a flowchart of Fig. 11.

The RF processing unit 201 of an STA receives the packet signal via an antenna 210 (step S 1101). The RF processing unit 201 conveys the received signal to the PHY layer processing unit 202.

The RF processing unit 201 also measures an RSSI when receiving the signal, and conveys the measured RSSI to the PHY layer processing unit 202 (step S1102).

The PHY layer processing unit 202 demodulates the received signal, and conveys the demodulated signal to the MAC layer processing unit 203. The PHY layer processing unit 202 also conveys the received RSSI to the MAC layer processing unit 203. The MAC layer processing unit 203 decodes the demodulated signal, and checks its CRC to detect whether or not an error has occurred. If the error has not occurred, it extracts a MAC address from a MAC header. The reception level acquiring unit 205 acquires the RSSI held by the PHY layer processing unit 202, and conveys the acquired RSSI to the other-station-addressed frame analyzing unit 206. The other-station-addressed frame analyzing unit 206 judges whether the received packet signal was addressed to the own station or the other station, by checking whether the MAC address of the MAC header corresponds to that of the own station. Then, the other-station-addressed frame analyzing unit 206 conveys the judging result and the RSSI which it received from the reception level acquiring unit 205, to the state notice frame creating unit 207. The state notice frame creating unit 207 creates a state notice frame which includes the received RSSI, and a reception identification flag appropriate to the judging result conveyed from the other-station-addressed frame analyzing unit 206, such that it indicates "1" when the received signal was addressed to the other station and "0" when the received signal was addressed to the own station. The state notice frame created by the state notice frame creating unit 207 herein corresponds to the frame body in Fig. 7. The state notice frame creating unit 207 then conveys the created state notice frame 207 to the MAC layer processing unit 203. The MAC layer processing unit 203 creates a packet signal which contains the received state notice frame as its frame body and whose destination address is the AP 100, and conveys the packet signal to the PHY layer processing unit 202. The PHY layer processing unit 202 modulates the received signal and conveys it to the RF processing unit 201. The RF processing unit 201 then wirelessly transmits a packet signal containing the state notice frame via the antenna 210 (step S1103).

The MAC layer processing unit 203 checks the MAC header to identify whether the signal was addressed to the own station (step S 1104). Said identification depends on whether the MAC header corresponds to the MAC address allocated to the own station.

The MAC layer processing unit 203, when the received signal was addressed to the own station (YES in step S1104), decodes the signal and conveys the decoded signal to the upper layer processing unit 204. The upper layer processing unit 204 executes processing in response to the type of the signal (step S1105). The processing executed by the upper layer processing unit 204 includes, for example, when the decoded signal is video data, a playback of the video data.

The Mac layer processing unit 203, when the received signal was not addressed to the own station (NO in step S1104), deletes the signal after decoding it(step S1106).

We have described on the operations of the STAs 200a, 200b when receiving a packet signal.

As mentioned above, the STAs 200a or 200b receives a packet signal and measures an RSSI, without relation to the fact that it was addressed to the own station or the other station. It then notifies the measured RSSI to the AP 100. The AP 100 determines, based on the received RSSI, a PHY rate for transmitting a packet signal to the STA from which it received the RSSI. Therefore, according to the present invention, the determination frequency of PHY rates increases compared to before, and therefore it is possible to make the PHY rate for transmitting a packet signal more responsive to fast fluctuations in channel environments than before.

**[Embodiment 2]**

We have mentioned that, in Embodiment 1, an STA receives a signal addressed to the other station, measures an RSSI, and notifies the measured RSSI to the AP, enabling its PHY rate determination and update frequency to be quicker than before. Meanwhile, propagation characteristics shown by the propagation characteristics information are used for the PHY rate determination. Since the propagation characteristics vary in response to channel environments, it is preferable to correct them.

So now, in Embodiment 2, description will be made on correction of propagation characteristics.

<Configuration>

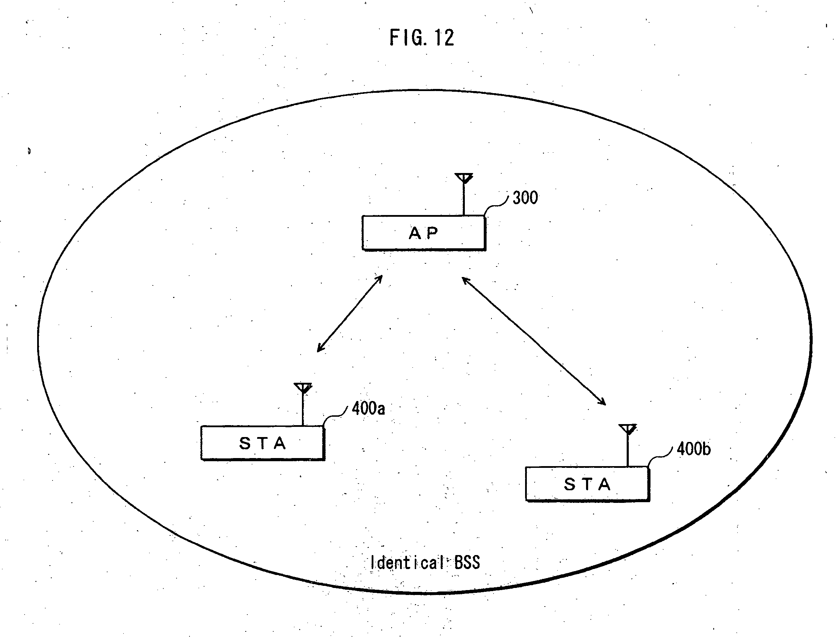

Fig. 12 shows a network configuration in Embodiment 2. An AP 300, STA 400a, and an STA 400b are included in an identical BSS.

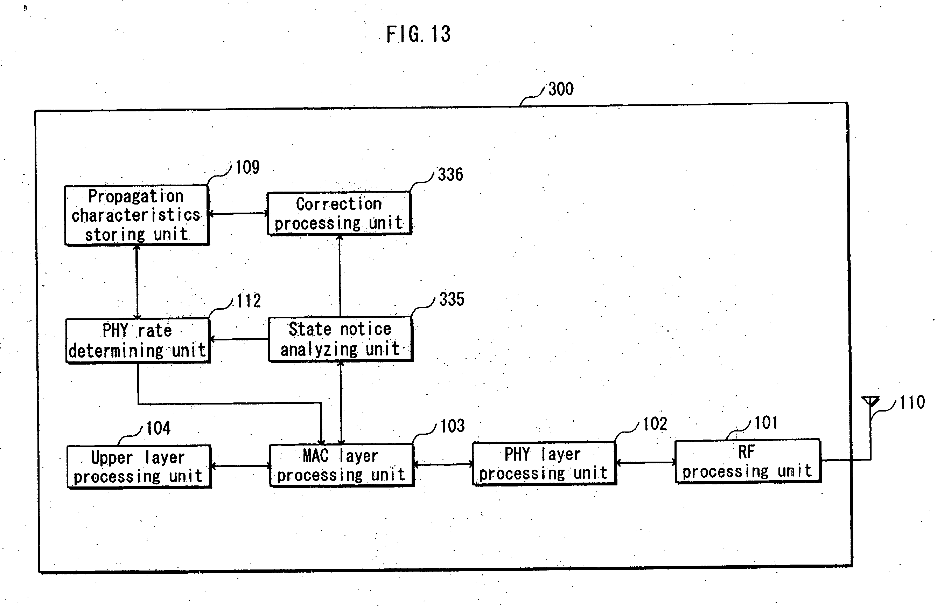

Fig. 13 is a functional block diagram showing a functional structure of the AP 300.

As shown in Fig. 13, the AP 300 includes a RF processing unit 101, a PHY layer processing unit 102, a MAC layer processing unit 103, an upper layer processing unit 104, a propagation characteristics storing unit 109, a PHY rate determining unit 112, a state notice analyzing unit 335, and a correction processing unit 336. Since the AP 300 has a substantially equal function to the AP 100, description will be omitted regarding the identically functioning parts marked with same numerals.

The state notice analyzing unit 335 includes a function of analyzing a state notice frame received from an STA, and extracts an "SA", a "DA", an "RSSI", a "PER", a "PHY rate", a "length", and a "count".

The correction processing unit 336 includes a function of correcting propagation characteristics. Specifically, the correction processing unit 336 corrects propagation characteristics of a PHY rate, the rate shown by the "PHY rate" contained in the state notice frame. The propagation characteristics are corrected and updated as follows: (i) calculating new propagation characteristics by the method of least squares, with respect to several sampling points on propagation characteristics originally stored, as well as a point which is determined by the "RSSI" and the "PER" in the state notice frame, and (ii) making the propagation characteristics storing unit store the calculating result to update the propagation characteristics, which will be indicated as a "PHY rate" in a state notice frame.

Now, description will be made on a functional structure of STAs 400a, 400b. Since the STA 400a and 400b basically have an identical structure, the STA 400a will serve as a subject in the description below.

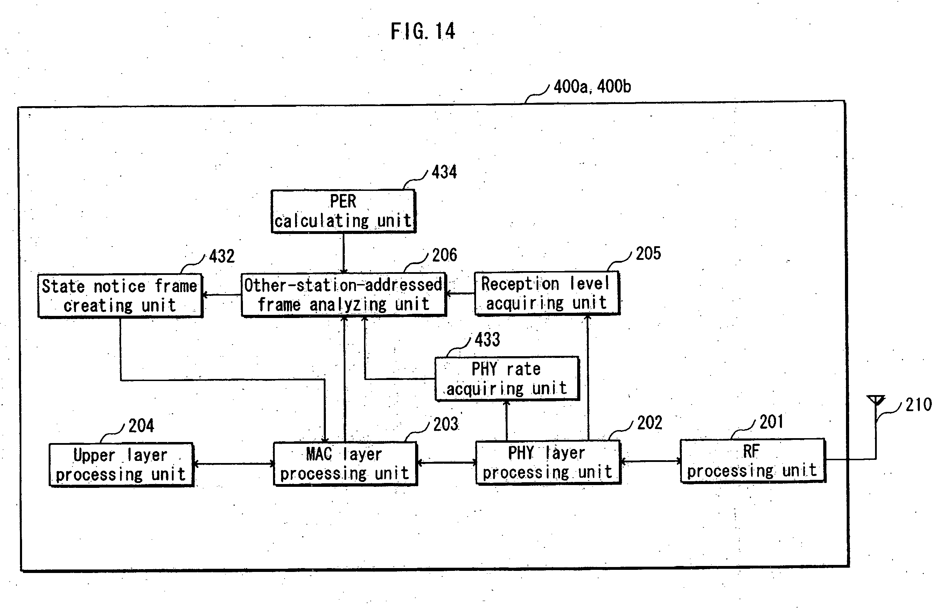

As shown in Fig. 14, the STA 400a includes an RF processing unit 201, a PHY layer processing unit 202, a MAC layer processing unit 203, an upper layer processing unit 204, a reception level acquiring unit 205, an other-station-addressed frame analyzing unit 206, and a state notice frame creating unit 207. Since the STAs 400a, 400b have a substantially equal function to the STAs 200a, 200b, description will be omitted regarding the identically functioning parts marked with same numerals as the STA 200a and 200b.

<Data>

Now, description will be made on a state notice frame in Embodiment 2. In addition, description will be omitted regarding the contents described in Embodiment 1.

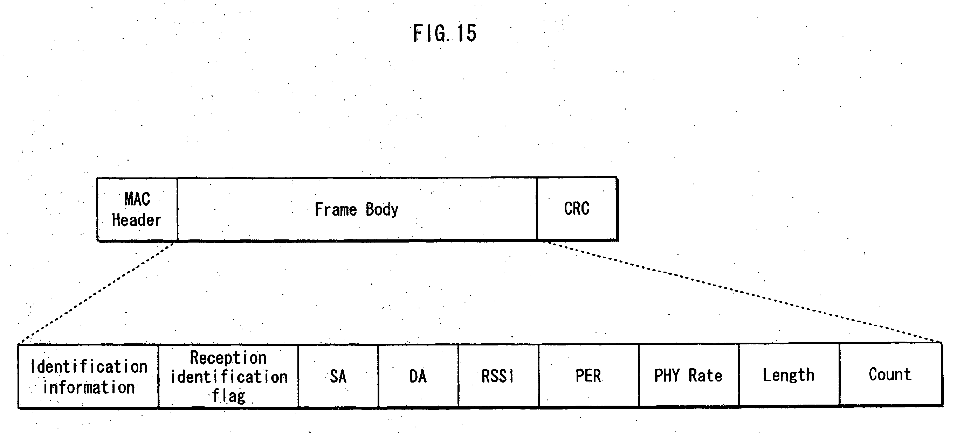

As shown in Fig. 15, the state notice frame includes a "MAC header", a "frame body", and a "CRC". The "frame body" comprises an "SA", a "DA", an "RSSI", a "PER", a "PHY rate", a "length", and a "count".

The "PER" indicates a measured packet error rate. It is calculated by ratio of packet error count to a predetermined number of packets received. The predetermined number of the packet signals used for the measurement of the "PER" includes a packet signal of which the RSSI was measured, and signals received most recently prior to the packet signal of which the RSSI was measured.

The "PHY rate" indicates a PHY rate at which the packet used for the calculation of the "PER" was sent forward. This information allows the AP 300 to acknowledge which PHY rate needs correction of propagation characteristics.

The "length" indicates data length of the packet used for calculating the PER. Generally speaking, the longer the data length, the more likely the PER increases.

The "count" indicates a total number of the packets used for calculating the PER.

We have described on the data structure of the state notice frame in Embodiment 2.

<Operation>

Now, we will describe on operations of the AP 300, the STA 400a, and the 400b in Embodiment 2.

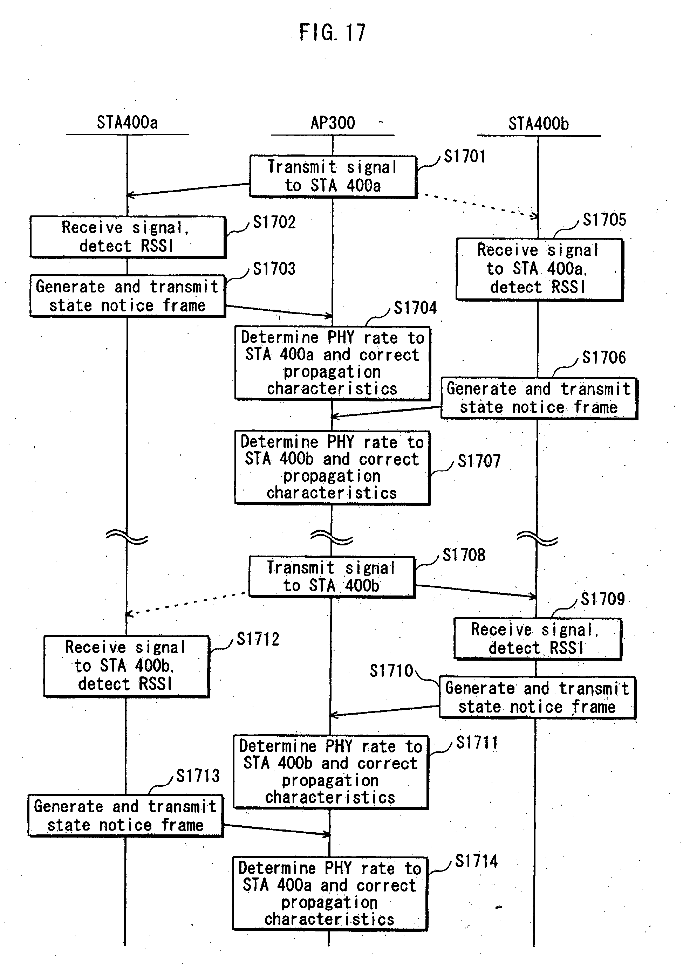

Fig. 17 is an operation sequence showing communications among the AP 300, the STA 400a, and the STA 400b.

Since the operation sequence shown in Fig. 17 is substantially identical to that in Fig. 9 of Embodiment 1, description will be made only on some portions that differ from Fig. 9. Embodiment 2 differs from Embodiment 1 in processing by the AP 300 in steps S904, S907, S911, and S914.

In each of the steps in Embodiment 1, the AP 100, only determines and stores a PHY rate for transmitting a signal to an STA from which it received a state notice frame.

On the other hand, in Embodiment 2, the AP 300 determines a PHY rate for subsequent transmission to the STA 400a, while correcting propagation characteristics with respect to the PHY rate used when transmitting a signal in step S1701, and the corrected propagation characteristics will be used for the STA 400a, as can be seen in step S 1704.

Further, in step S1707, the AP 300 also determines a PHY rate for subsequent transmission to the STA 400b, while correcting propagation characteristics with respect to the PHY rate used when transmitting a signal in step S1701, and the corrected propagation characteristics will be used for the STA 400b.

Again, in step S 1711, the AP 300 also determines a PHY rate for subsequent transmission to the STA 400b, while correcting propagation characteristics with respect to the PHY rate used when transmitting a signal in step S1708, and the corrected propagation characteristics will be used for the STA 400b.

In step S 1714, the AP 300 also determines a PHY rate for subsequent transmission to the STA 400a, while correcting propagation characteristics with respect to the PHY rate used when transmitting a signal to the STA b in step S 1708, and the corrected propagation characteristics will be used for the STA 400a.

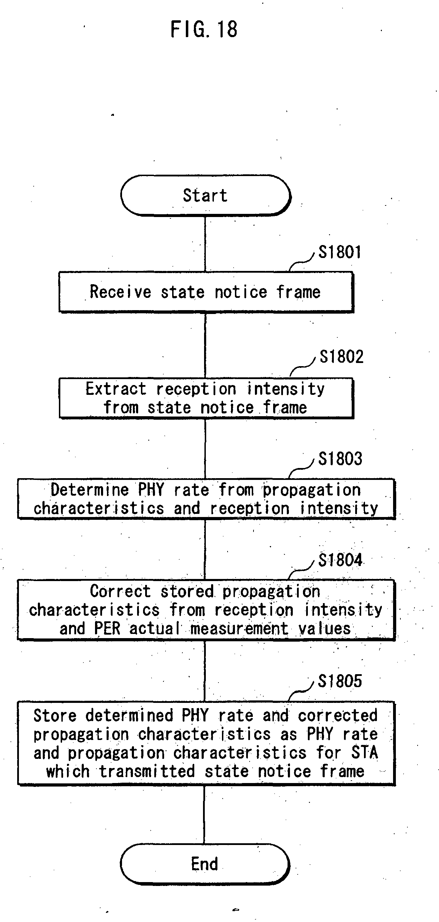

Now, description will be made on operations of the AP 300 with reference to Fig. 18.

Regarding a flowchart in Fig. 18, points in which it differs from the flowchart shown in Fig. 10 will be looked at.

Since steps S1801 to S1803 in Fig. 18 correspond to steps S1001 to S1003 in Fig. 10, description will be omitted.

After the PHY rate is determined in step S1803, the correction processing unit 336 corrects propagation characteristics (step S1804).

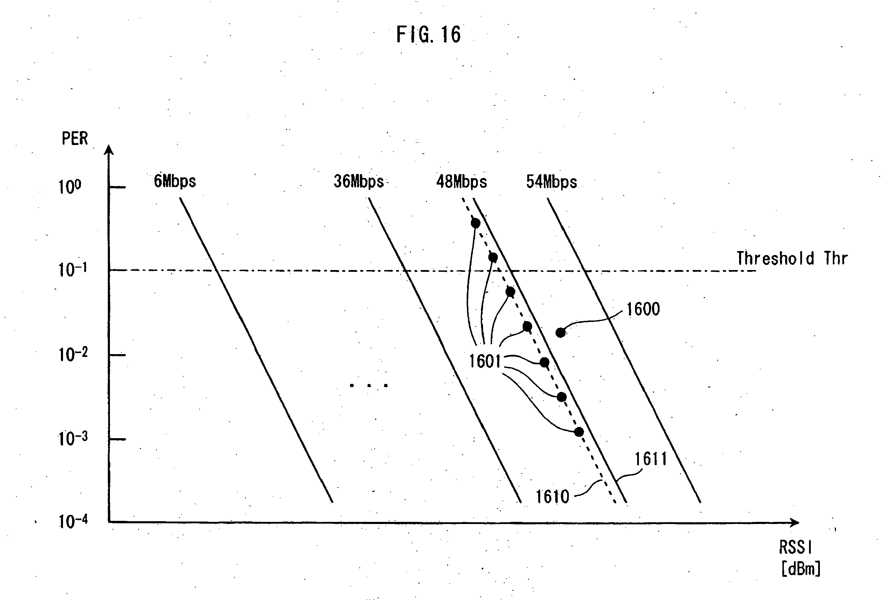

Here, the correction of propagation characteristics will be explained in details, with reference to Fig. 16.

In the explanation herein, it is envisaged that propagation characteristics for the PHY rate of 48 Mbps will be corrected, although Fig. 16 shows propagation characteristics for respective PHY rates.

In Fig. 16, the propagation characteristics for 48 Mbps, before correction, is shown by a dashed line 1610. Arbitrary several points on a formula (the dashed line 1610) for the propagation characteristics are taken as sampling points 1601. The correction processing unit 336 calculates a new formula (which is shown by a solid line 1611 in Fig. 16) for propagation characteristics by the method of least squares, with respect to a point 1600 which was obtained from an actual measurement values of the PER and the RSSI notified by the state notice frame, as well as the aforementioned sampling points. Then, with the calculated new formula for propagation characteristics, the propagation characteristics stored in the propagation characteristics storing unit 109 will be updated.

Then, the correction processing unit 336 updates the propagation characteristics for 48 Mbps that have been stored in the propagation characteristics storing unit 109, with those for 48 Mbps that are newly calculated. Again, the PHY rate determining unit 112 conveys, to the MAC layer processing unit 103, the determined PHY rate for transmission to the STA from which it received the state notice frame, enabling the MAC layer processing unit 103 to update the PHY rate table 800 (step S 1805).

In addition, operations of the STAs 400a, 400b are substantially identical to those of the STAs 200a, 200b, and so description will be omitted. Nevertheless, the STAs 400a, 400b differ from the STAs 200a, 200b in a point that the structure of the state notice frame created in the state notice frame creating unit is what is shown in Fig. 15.

As we have mentioned, in Embodiment 2, the STA 400a (400b) receives a signal addressed to the other station, and notifies the AP, not only of the RSSI but also of the PER, by means of a state notice frame. The AP 300 not only determines a PHY rate but also corrects the propagation characteristics for the STA from which it received the state notice frame. So, according to the present invention, it is possible to increase frequency of correcting propagation characteristics, and therefore determine PHY rates more precisely.

Further, the correction of the propagation characteristics allows appropriate correction and update in accordance with multipath environments, even when a wireless LAN system is brought into use in a complex multipath environment. It also allows the propagation characteristics to change in accordance to a current system environment, even when the propagation characteristics in a wireless reception device vary, due to an on/off state of a diversity reception. It also becomes possible to cope with characteristics tolerances of wireless LAN modules.

**[Embodiment 3]**

As we have mentioned, in Embodiment 1, a PHY rate is determined based on propagation characteristics and a threshold PER value. Yet, it is also possible to use another method for determining the PHY rate. In Embodiment 3, an effective transmission velocity (which is also referred to as throughput) is estimated, so as to determine the PHY rate based on it.

<Configuration>

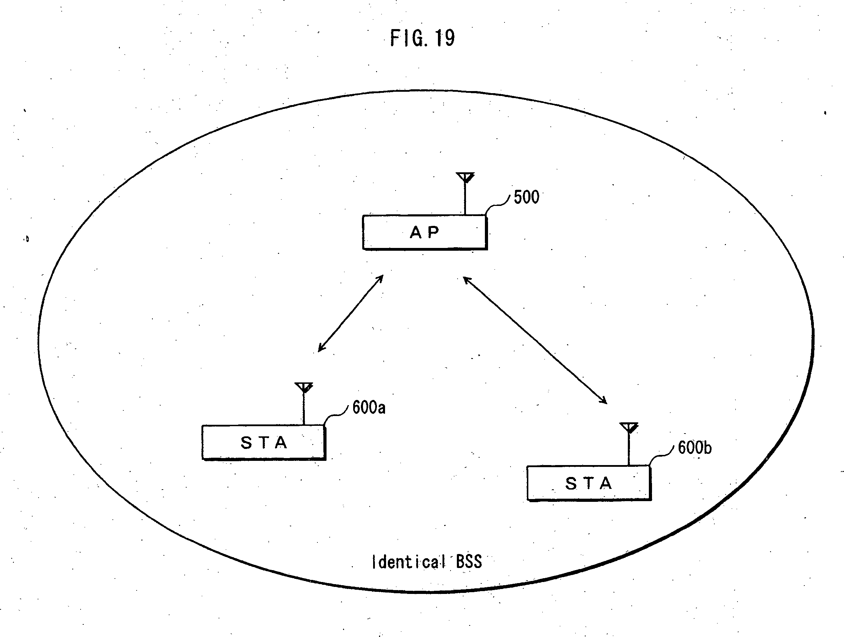

Fig. 19 shows a network configuration in Embodiment 3. An AP 500a, an STA 600a, and an STA 600b are included within an identical BSS.

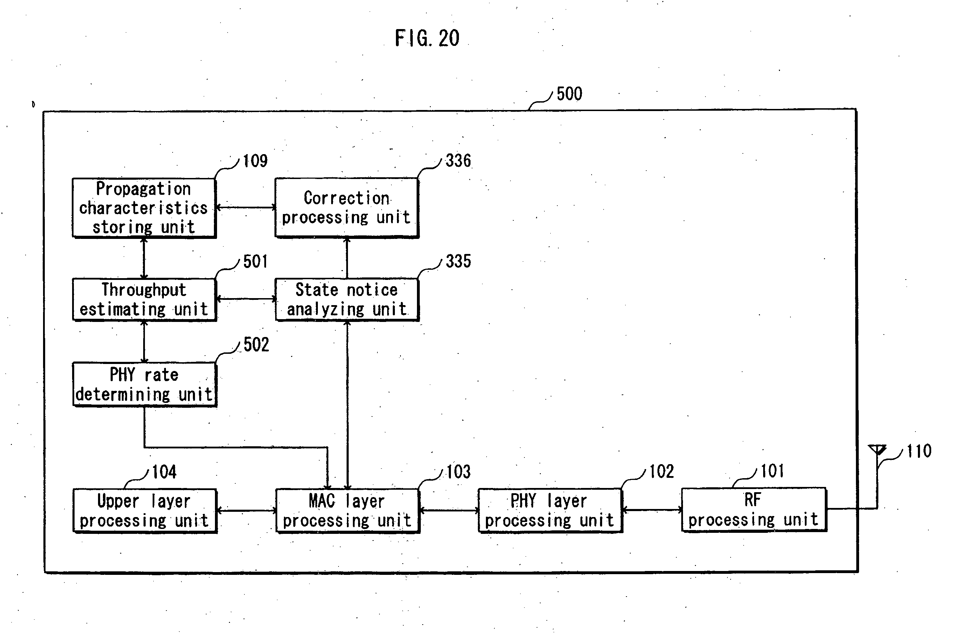

Fig. 20 is a functional block diagram showing the functional structure of the AP 500.

As shown in Fig. 20, the AP 500 includes an RF processing unit 101, a PHY layer processing unit 102, a MAC layer processing unit 103, an upper layer processing unit 104, a propagation characteristics storing unit 109, a state notice analyzing unit 335, a correction processing unit 336, a throughput estimating unit 501, and a PHY rate determining unit 502. Since the AP 500 has a substantially equal function to the AP 300, description will be omitted regarding the identically functioning parts marked with same numerals.

The throughput estimating unit 501 has a function of estimating throughputs for respective PHY rates, based on an RSSI in each state notice frame which was analyzed in the state notice analyzing unit 335.

Here, a method for estimating the throughput will be looked at. Since the estimation is calculated for each PHY rate, in the description herein, it is envisaged that one PHY rate will be targeted for estimation of a throughput.

The throughput estimating unit 501 estimates a PER, by applying the RSSI between an AP and an STA specified by a state notice frame, to the RSSI value in the propagation characteristics (RSSI-PER characteristics) which have been stored in the propagation storing unit 109 with respect to the target PHY rate.

After estimating the PER, the throughput estimating unit 501 calculates a surplus bandwidth allowance (which can also be referred to as merely surplus) which is defmed in the IEEE 802.11e Draft 13.0.

The surplus means a ratio of a required bandwidth, in which various factors, such as re-transmission, are taken into consideration in stream transmission, to a normal bandwidth with no consideration of re-transmission. So the surplus cannot be smaller than 1.

In the calculation, first of all, number of redundant frames S should be calculated, for they assume re-transmission. The number of redundant frames S is calculated by use of Forumla 1 below which is defined by the IEEE 802.11e Draft 13.0.

[Formula 1]

$$P_{drop} = \sum_{k=S+1}^{S+100} {}_{S+100}C_k \, p^k (1-p)^{100+S-k}$$

In Formula 1, p is a PER. $P_{drop}$ means a packet loss rate, and is a ratio of the number of packets transmitted with errors to 100 packets, in a frame of 100 + S.

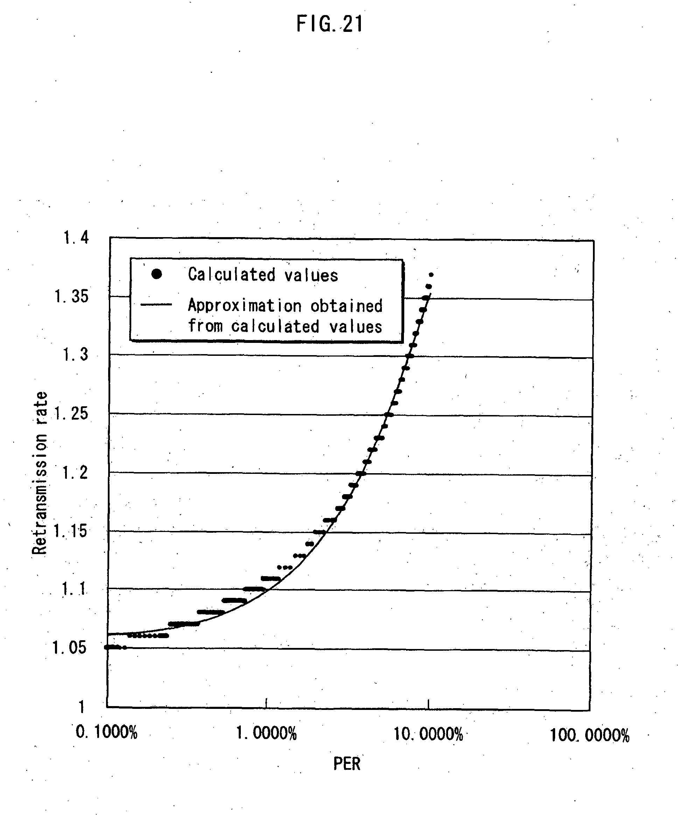

Fig. 21 is a graph showing a calculation result of the number of the redundant frames S by use of Formula 1, such that the packet loss rate is less than or equal to 10E-8 in each PER.

In the graph shown in Fig. 21, the axis of abscissa indicates the PER, and the axis of ordinate indicates the surplus. Black points in Fig. 21 are values obtained by Formula 1 for each PER. An approximate curve (which is shown by a solid line in Fig. 21) indicates an approximation given by respective black points, for example, by the method of least squares.

For example, given that a content rate is 10 Mbps and a surplus value is 1.25, transmission of the content requires a bandwidth of at least 12.5 Mbps.

For reference, as for the packet loss rate herein, it is fixed to 10E-8 so that a video image of approximately two hours long (which amounts to approximately 1.65E + 7 transmission packets) may be viewed without any packet loss in a 28 Mbps (which is supposedly a fastest rate) BS digital broadcasting system using a full TS (Transport Stream) transmission.

With the assumption that the packet loss rate should be less than or equal to 10E-8, the number of redundant frames S can be calculated by substituting the PER value to p in Formula 1 on the above. Given the above Formula 1, the following formula equally makes sense; Surplus = (100 + S)/100. Therefore, the surplus can be calculated by substituting the previously calculated number of redundant frames to S in the formula.

The throughput estimating unit 501 estimates a throughput from the calculated surplus.

In the description herein, it is supposed that the throughput will be calculated, in a condition that a PHY rate, a target for calculation of the throughput, is 48 Mbps , and a surplus is 1.25. Firstly, the PHY rate of 48 Mbps has a maximum effective rate of approximately 32 Mbps in the MAC layer level. This maximum effective rate is calculated, for the case of an HCCA transmission of the IEEE 802.11 e, with consideration to a preamble in a frame, a PHY header, a MAC header, a SIFS (Short Inter Frame Space), an ACK frame. The throughput can then be obtained by dividing the calculated effective transmission rate by the surplus; in this case, 32000000 (bps)/1.25 = 2560000 (bps).

As mentioned above, the throughput estimating unit 501 works out the throughput, by calculating the surplus from the PER, and dividing the effective transmission rate of the target PHY rate by the calculated surplus.

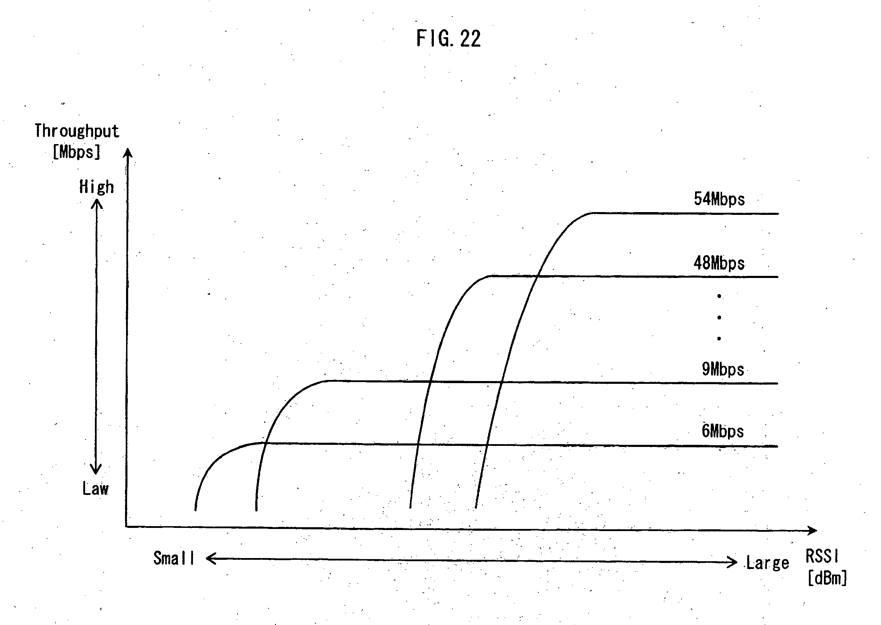

Fig. 22 is a graph showing relations between the RSSI and the throughput for respective PHY rates. In the graph, the axis of abscissas indicates the RSSI, and the axis of ordinate indicates the throughput. The RSSI in Fig.22 means an RSSI in the state notice frame which is transmitted to the AP from the STA, and the throughput means a throughput which is estimated by the throughput estimating unit 501. As can be seen from Fig. 22, as the RSSI changes, the throughput value for each PHY rate varies.

The PHY rate determining unit 502 has a function of conveying a PHY rate to the MAC layer processing unit 103 for subsequent transmission, such that, among the throughputs estimated by the throughput determining unit 501, the highest throughput will be obtained at the PHY rate.

In addition, since the STAs 600a,600b in Embodiment 3 have a substantially equal function to the STAs 400a,400b, description will be omitted.

<Operation>

Now, description will be made on operations in Embodiment 3, particularly operations of the AP 500 for determining a PHY rate. Embodiment 3 differs from Embodiment 2 in the method for determining the PHY rate.

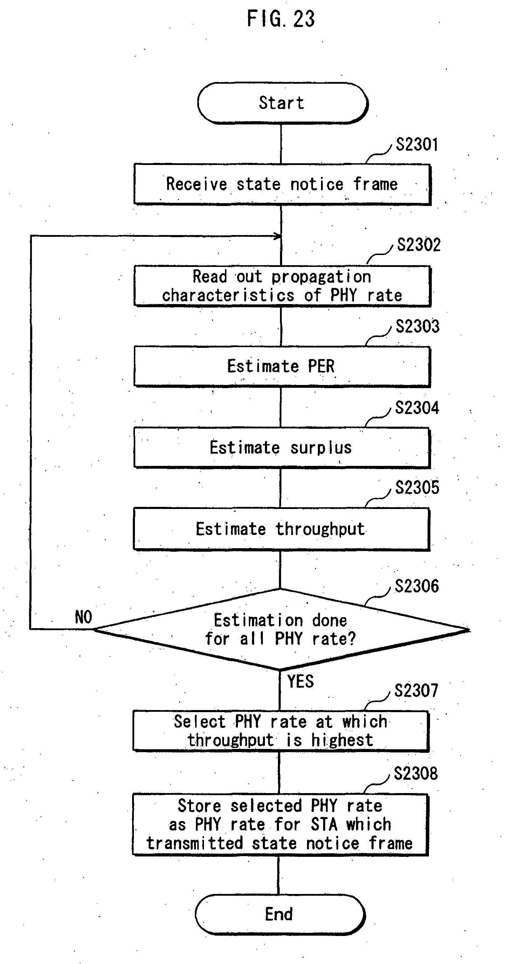

Fig. 23 is a flowchart showing operations of the AP 500 in Embodiment 3. The flowchart shows the operations upon receiving a state notice frame. It particularly shows operations of the throughput estimating unit 501 and the PHY rate determining unit 502.

The RF processing unit 101 receives a packet signal including the state notice frame, via an antenna 110 (step S2301).

The throughput estimating unit 501 reads out propagation characteristics of a PHY rate for which it intends to calculate a throughput, from the propagation characteristics storing unit 109 (step S2302). Here, it is provided that the calculation is carried out beginning with the lowest PHY rate sequentially.

The throughput estimating unit 501 estimates a PER, by applying the RSSI contained in the received state notice frame to the RSSI in the propagation characteristics (RSSI-PER characteristics) which it has read out.

After estimating the PER, the throughput estimating unit 501 calculates the number of redundant frames S, from the PER and the above Formula 1, and then works out the surplus from the calculated number of the redundant frames S (step S2304).

Subsequently, by dividing the effective transmission rate of the selected PHY rate by the surplus, it estimates a throughput (step S2305). It also conveys, to the PHY rate determining unit 502, the estimated throughput in combination with information of the selected PHY rate.

The throughput estimating unit 501 judges whether it has estimated all throughputs for each of the available PHY rates (which amount to 8 kinds in the IEEE 802.11a standard) (step S2306).

If it judges negatively (which corresponds to NO in step S 2306), it returns to step S2302, and performs all the processing that follows the step S2302.

If it judges affirmatively (which corresponds to YES in step S2306), the PHY rate determining unit 502 proceeds with a next step; since all the throughputs for each PHY rate have been conveyed to the PHY rate determining unit 502, it selects the fastest throughput among the received throughputs. Then, it also conveys the PHY rate corresponding to the selected throughput, to the MAC layer processing unit 103 (step S2307), and updates the PHY rate table 800, by having the conveyed PHY rate stored in a PHY rate table 800 as the PHY rate for subsequent transmission between the AP and the STA indicated by the state notice frame (step S2308). In addition, since the RSSI does not depend on the PHY rate, the RSSI used here for the calculation of the throughput has a same value in any PHY rate.

As mentioned above, Embodiment 3 estimates the effective transmission velocity to determine the PHY rate, while correcting the propagation characteristics. According to the present invention, firstly, the effective transmission velocity is speculated to determine the PHY rate, realizing it to select the PHY rate which is presumed to be most effective for transmission. Transmission using thus selected PHY rate improves transmission efficiency. Moreover, with the increased frequency of correcting the propagation characteristics, Embodiment 3 also allows the effective transmission velocity to be estimated more precisely in determining the PHY rate.

<Other embodiments>

The method of the present invention has been described hereinbefore with reference to the above embodiments thereof. However, it is natural that embodiments of the present invention are not limited to the embodiments, and other various modifications which fall within the scope of the present invention will be described below.

(1) The above embodiments have a specification that an RSSI is measured upon each reception of an other-station-addressed signal, to create a state notice frame, and that the state notice frame will be transmitted to an AP. Unfortunately, it has a drawback that the AP might suffer from overload in processing, whereas it helps to raise the correction frequency of PHY rates to an almost maximum level. Accordingly, it is possible to measure the RSSI to create and send the state notice frame not everytime, but once in a predetermined time (for example, once in five times) an STA receives the other-station-addressed signals.

Alternatively, it is also possible to measure the RSSI upon each reception, while creating the state notice frame once in several times. In this case, the RSSI in the state notice frame may incorporate an average value of several RSSI measurement values.

It is also possible for the STA to transmit the state notice frame only when the RSSI changes for more than a predetermined value, upon receiving signals within a certain amount of time. A change of less than the predetermined value means a minor fluctuation in a channel environment. Therefore, the PHY rate is unlikely to change even if state notice frames are continued to be transmitted.

(2) In the above embodiments, the STA merely measures the RSSI, and notifies the AP of the measured RSSI in the form of the state notice frame. On the other hand, it can also be envisaged that the STA further performs determination of a PHY rate, and notifies, instead of the RSSI, the determined PHY rate to the AP. This is to say, each STA may hold propagation characteristics, and determine the PHY rate based on the RSSI measured by the STA.

It can also be envisaged that the AP stores the notified PHY rate as a PHY rate for subsequent transmission of a packet signal to the STA from which it received the PHY rate.

In case that the STA holds the propagation characteristics to determine the PHY rate, the STA may have a function of correcting the propagation characteristics, as shown in Embodiments 2 and 3.

(3) In the above Embodiments 2 and 3, we described correction of the propagation characteristics by the method of least squares. However, correction method is not limited to the method of least squares, and it could be any correction which causes the formula of propagation characteristics to be approximated to actual measurement values of the PER and the RSSI.

Also, it is possible to leave records of the actual measurement values in the past, so as to calculate new propagation characteristics by using a plurality of actual measurement values in the past, one or more actual measurement values which were measured most recently, and sampling points on propagation characteristics which have been stored and held.

(4) The above embodiments use the RSSI as a reception level, and the PER as an error rate, but they are not limited.

For example, in place of the RSSI, an SNR (Signal to Noise Ratio) or a CIR (Carrier to Interference Ratio) may be used as a reception level.

Also, in place of the PER, a BER (Bit Error Rate) or an FER (Frame Error Rate) may be used as an error rate.

In those cases, propagation characteristics information stored by the propagation characteristics storing unit 109 is not limited to RSSI-PER characteristics, but it can be SNR-BER characteristics, SIR-BER characteristics, or the like, in accordance with the contents of the reception level and the error rate.

(5) In the above embodiments, the RSSI, the PER, and the like are measured upon reception of an own-station-addressed packet or an other-station-addressed data packet. However, the measurement is not limited to when the data packet is received. The RSSI and the PER of the channel environment may be measured when, for example, management frames, such as a beacon frame, an association request frame, a probe request frame, or control frames, such as an ACK frame, are received.

(6) Although it is not specifically described in Embodiment 3, similarly to Embodiment 2, correction of the propagation characteristics may also be executed in Embodiment 3.

(7) In Formula in the above embodiment 3, PHY rate table means a ratio of the number of packets transmitted with errors to 100 packets, in a frame of 100 + S. However, it can be varied in accordance with sizes of a transmission buffer of the AP or a reception buffer of the STA.

(8) In the above embodiments, each STA notifies the RSSI in the form of the state notice frame, but this is not limiting. Without using the state notice frame, the AP may measure the RSSI of an ACK upon receiving the ACK from the STA, so as to grasp the channel state, in order to determine the PHY rate.

(9) The above embodiments shows a data packet transmission in downlink from the AP to the STAs. However, in the present invention, measurement of the RSSI to determine the PHY rate is not limited to the downlink, and it may also be executed in uplink. In other words, the STAs may include functions, including a PHY rate determining function and a propagation characteristics correcting function, which are assigned to the AP in the above embodiments.

Further, it can also be envisaged that each STA stores propagation characteristics in direct link between the STAs (STA-to-STA direct communication; DLS (Direct Link Setup) in the IEEE 802.11 e specification), and selects and sets up the PHY rate during direct transmission. (10) Although usages of a "reception identification flag", a "length", and a "count" contained in the state notice frame in the above Embodiments 2 and 3 have not been specifically described, the following usages can be envisaged, and they may be incorporated into the structure of the AP.

As an exemplary usage, the AP may temporarily suspend correction processing of propagation characteristics (RSSI-PER characteristics) in accordance with values of the "reception identification flag", the "length", and the "count". For, the PER varies in response to packet length, even at an invariable PHY rate and with an invariable RSSI, for example.

(11) In the above embodiment 1, the execution sequence of steps S903 and S904 and that of steps S906 and S907 in Fig. 9 may be inverted.

(12) In the above embodiment 1, processing in step S1103 and that in steps S 1104 to 1106 may be executed simultaneously.

(13) Each functional part of the AP and the STAs in the above embodiments may also be implemented in the form of one or more LSIs (Large Scale Integrations), and a plurality of the functional parts may be implemented in the form of an LSI. The LSI is also called a VLSI (Very Large Scale Integration), a super LSI, an ultra LSI, or an Ic (Integrated Circuit), depending on differences in an integration degree. Integration methods are not limited to the above LSIs, and a dedicated communication circuit or a general-purpose processor may also be used.

Further, the respective functional parts of the AP and the STAs in the above embodiments may also be implemented in the form of an FPGA (Field Programmable Gate Array) or other reconfigurable processors in which connection or setting of circuit cells in the LSI is reconfigurable.

Naturally, due to further development of semiconductor technology or a different technology derived from it, if an advent of a new integration circuit technology replaces the present semiconductor technology the functional parts could be integrated with use of any technology. For example, application of biotechnique can be envisaged.

(14) It is also possible to have the following control program stored in storing medium, or circulated and distributed through various communication channels: the control program comprising program codes for causing processors in stations or the like, as well as various circuits which are connected to the processors, to execute operations of communications, processing of determining the PHY rate (see Figures), and the like, which are described in the above embodiments. Such storing medium include an IC card, a hard disk, an optical disk, a flexible disk, a ROM. The circulated and distributed control program becomes available by being contained in a memory and the like which can be read out by a processor. The control program is then executed by the processor, so that the various functions described in the embodiments will be realized.

**[Industrial Applicability]**

A communication device according to the present invention may be used as an access point that is able to set up transmission rates for communicating with communication terminals appropriately. It may be useful in video image transmission using a wireless LAN or a PLC technology, or in a VoIP transmission. It is particularly useful in a wireless video image transmission and a wireless VoIP trasnsmission, within a network in which a plurality of STAs are connected to an AP in a wireless LAN sytem, as represented by the IEEE 802.11.

**Claims**

1. A communication device that communicates with a first communication terminal (400a) and a second communication terminal (400b), the communication device comprising:

   a transmitting unit (101, 110) operable to transmit a signal;
   a receiving unit (101, 110) operable to receive, from the first communication terminal (400a), a control signal including reception quality information, the reception quality information showing a reception quality pertaining to a time when the first communication terminal (400a) received a signal which was transmitted from the transmitting unit (101, 110) to the second communication terminal (400b);
   a propagation characteristics holding unit (109) operable to hold propagation characteristics information, the propagation characteristics information showing a relation between a reception quality and a signal error rate, with respect to each of the plurality of transmission rates; and a transmission rate controlling unit including a transmission rate determining unit (112) operable to determine one transmission rate from among a plurality of transmission rates for a signal which is to be transmitted to the first communication terminal (400a), in accordance with (i) the propagation characteristics information and (ii) the reception quality contained in the reception quality information received by the receiving unit (101, 110), such that the determined transmission rate is fastest among all transmission rates at which the signal error rate corresponding to the reception quality is less than or equal to a predetermined threshold value; wherein

the transmitting unit (101, 110) transmits a signal to the first communication terminal (400a) at the determined transmission rate; and

**characterized in that**

the control signal further includes signal error rate information, the signal error rate information showing a signal error rate pertaining to a time when the first communication terminal (400a) received a signal which was transmitted to the second communication terminal (400b);

the transmission rate controlling unit further includes a propagation characteristics correcting unit (336) operable to correct the propagation characteristics information in accordance with (i) the reception quality information and (ii) the signal error rate information, both contained in the control signal received by the receiving unit (101,110); and

the transmission rate determining unit (112) determines a transmission rate for a signal which is to be transmitted to the first communication terminal (400a), in accordance with (i) reception quality information contained in a control signal which is newly received by the receiving unit and (ii) the corrected propagation characteristics information.

2. The communication device according to Claim 1, wherein

the reception quality is a Received Signal Strength Indication, RSSI.

3. The communication device of Claim 1, further comprising,

a second receiving unit operable to receive a signal which was transmitted from the first communication terminal (400a) to the second communication terminal (400b), wherein

the transmission rate controlling unit determines a transmission rate for a signal which is to be transmitted to the first communication terminal (400a), in accordance with the signal received by the second receiving unit.

4. The communication device of Claim 1, wherein the plurality of transmission rates are determined by a modulation method and an encoding ratio in a physical layer.

5. The communication device of Claim 1, wherein the plurality of transmission rates are determined by a modulation method, an encoding ratio, a frequency bandwidth, a guard interval length, and number of spacial streams in a physical layer.

6. A communication device that communicates with a first communication terminal (600a) and a second communication terminal (600b), the communication device comprising:

a transmitting unit (101, 110) operable to transmit a signal;
a receiving unit (101, 110) operable to receive, from the first communication terminal (600a), a control signal including reception quality information, the reception quality information showing a reception quality pertaining to a time -when the first communication terminal (600a) received a signal which was transmitted from the transmitting unit (101, 110) to the second communication terminal (600b);
a propagation characteristics information holding unit (109) operable to hold (i) a propagation characteristics, the propagation characteristics showing a relation between the reception quality and a signal error rate with respect to each of the plurality of transmission rates, and (ii) retransmission rate information, the retransmission rate information showing a relation between the signal error rate and a retransmission rate; and
a transmission rate controlling unit operable to determine one transmission rate from among a plurality of transmission rates for a signal which is to be transmitted to the first communication terminal (600a), in accordance with the reception quality information; wherein
the transmitting unit (101, 110) transmits a signal to the first communication terminal (600a) at the determined transmission rate; and
the transmission rate controlling unit includes

(a) an effective transmission velocity estimating unit (501) operable to estimate an effective transmission velocity when each of the plurality of transmission rates is used respectively, in accordance with (i) the reception quality information, (ii) the propagation characteristics information, and (iii) the retransmission rate information, and
(b) a transmission rate determining unit (502) operable to determine a transmission rate for a signal which is to be transmitted to the first communication terminal (600a), such that the estimated effective transmission velocity becomes fastest at the determined transmission rate;

**characterized in that**
the control signal further includes signal error rate information, the signal error rate information showing a signal error rate pertaining to a time when the first communication terminal (600a) received a signal which was transmitted to the second communication terminal (600b);
the transmission rate controlling unit further includes,
a propagation characteristics correcting unit (336) operable to correct the propagation characteristics, by using a combination of the reception quality information and the signal error rate information, wherein
the effective transmission velocity estimating unit (501) estimates an effective transmission velocity when each of the plurality of transmission rates is used respectively, by using a combination of the reception quality information and the propagation characteristics information.

**7.** The communication device of Claim 6, wherein
the effective transmission velocity estimating unit (501) estimates a signal error rate with respect to each of the plurality of transmission rates respectively, by using a combination of the reception quality information and the propagation characteristics information, estimates a retransmission rate with respect to each of the plurality of transmission rates respectively, from the signal error rate which was estimated with respect to each of the plurality of transmission rates, and estimates an,effective transmission velocity with respect to each of the plurality of transmission rates respectively, from the retransmission rate which was estimated with respect to the each of the plurality of transmission rates.

**8.** The communication device of Claim 6, wherein
the propagation characteristics correcting unit (336) calculates an approximate line from (i) an actual measurement point obtained by the measured reception quality level and the measured signal error rate, and (ii) a plurality of sampling points on a formula of the current propagation characteristics, and updates the current propagation characteristics by the calculated approximate line with use of the method of least squares.

**9.** The communication device according to any of Claims 1 or 6, wherein
the propagation characteristics correcting unit (336) corrects the propagation characteristics of a transmission rate which is to be used for transmission to the first communication terminal (400a, 600a), the transmission rate having been used for transmission to the second communication terminal (400b, 600b).

**10.** A transmission rate controlling method in a communication device which communicates with a first communication terminal (400a) and a second communication terminal (400b), operable to control transmission rates for each of the communication terminals, the transmission rate controlling method comprising the steps of:

receiving (S1801) a control signal from the first communication terminal (400a), the control signal including reception quality information, the reception quality information showing reception quality pertaining to a time when the first communication terminal (400a) received a signal which was transmitted from the communication device to the second communication terminal (400b);
holding (S1804) propagation characteristics information, the propagation characteristics information showing a relation between a reception quality and a signal error rate, with respect to each of the plurality of transmission rates; and
controlling (S1803 to S1805) transmission rates to determine one transmission rate from among a plurality of transmission rates for a signal which is to be transmitted to the first communication terminal (400a), in accordance with (i) the propagation characteristics information and (ii) the reception quality contained in the received reception quality information, such that the determined transmission rate is fastest among all transmission rates at which the signal error rate corresponding to the reception quality is less than or equal to a predetermined threshold value;
**characterized in that**
the control signal further includes signal error rate information, the signal error rate information showing a signal error rate pertaining to a time when the first communication terminal (400a) received a signal which was transmitted to the second communication terminal (400b);
the step of controlling (S1803 to S1805) transmission rates further includes a steps of
correcting (S1804) the propagation characteristics information, in accordance with (i) the reception quality information and (ii) the signal error rate information, both contained in the received control signal received; and

determining a transmission rate for a signal which is to be transmitted to the first communication terminal (400a), in accordance with (i) reception quality information contained in a control signal which is newly received and (ii) the corrected propagation characteristics information.

11. A transmission rate controlling computer program comprising computer program code means adapted to perform the steps of the method of claim 10 when said program is run on a computer.


**Patentansprüche**

1. Kommunikationsvorrichtung, die mit einem ersten Kommunikations-Endgerät (400a) sowie einem zweiten Kommunikations-Endgerät (400b) kommuniziert, wobei die Kommunikationsvorrichtung umfasst:

eine Sendeeinheit (101, 110), die in Funktion ein Signal senden kann;
eine Empfangseinheit (101, 110), die in Funktion von dem ersten Kommunikations-End-gerät (400a) ein Steuersignal empfangen kann, das eine Empfangsqualitäts-Information enthält, wobei die Empfangsqualitäts-Information eine Empfangsqualität anzeigt, die sich auf einen Zeitpunkt bezieht, zu dem das erste Kommunikations-Endgerät (400a) ein Signal empfangen hat, das von der Sendeeinheit (101, 110) zu dem zweiten Kommunikations-Gerät (400b) gesendet wurde;
eine Einheit (109) zum Speichern einer Ausbreitungscharakteristik, die in Funktion eine Ausbreitungscharakteristik-Information speichern kann, wobei die Ausbreitungscharakteristik-Information eine Beziehung zwischen einer Empfangsqualität und einer Signal-Fehlerrate in Bezug auf jede der Vielzahl von Übertragungsraten anzeigt; und
eine Einheit zum Steuern einer Übertragungsrate, die eine Einheit zum Bestimmen einer Übertragungsrate (112) enthält, die in Funktion eine Übertragungsrate von einer Vielzahl von Übertragungsraten für ein Signal, das zu dem ersten Kommunikations-Endgerät (400a) gesendet werden soll, entsprechend 1) der Ausbreitungscharakteristik-Information und 2) der Empfangsqualität, die in der durch die Empfangseinheit (101, 110) enthaltene Empfangsqualitäts-Information enthalten ist, so bestimmt, dass die bestimmte Übertragungsrate von allen Übertragungsraten, bei denen die der Empfangsqualität entsprechende Signal-Fehlerrate kleiner oder gleich einem vorgegebenen Schwellenwert ist, am höchsten ist; wobei

die Sendeeinheit (101, 110) ein Signal mit der bestimmten Übertragungsrate zu dem ersten Kommunikations-Endgerät (400a) sendet; und
**dadurch gekennzeichnet, dass**
das Steuersignal des Weiteren eine Signal-Fehlerraten-Information enthält, wobei die Signal-Fehlerraten-Information eine Signal-Fehlerrate anzeigt, die sich auf einen Zeitpunkt bezieht, zu dem das erste Kommunikations-Endgerät (400a) ein Signal empfangen hat, das zu dem zweiten Kommunikations-Endgerät (400b) gesendet wurde;
die Einheit zum Steuern einer Übertragungsrate des Weiteren eine Einheit (336) zum Korrigieren einer Ausbreitungscharakteristik enthält, die in Funktion die Ausbreitungscharakteristik-Information entsprechend 1) der Empfangsqualitäts-Information und 2) der Signal-Fehlerraten-Information korrigieren kann, die beide in dem durch die Empfangseinheit (101, 110) empfangenen Steuersignal enthalten sind; und
die Einheit (112) zum Bestimmen einer Übertragungsrate eine Übertragungsrate für ein Signal, das zu dem ersten Kommunikations-Endgerät (400a) gesendet werden soll, entsprechend 1) einer Empfangsqualitäts-Information, die in einem neu durch die Empfangseinheit empfangenen Steuersignal enthalten ist, und 2) der korrigierten Ausbreitungscharakteristik-Information bestimmt.

2. Kommunikationsvorrichtung nach Anspruch 1, wobei
die Empfangsqualität ein Received Signal Strength Indication, RSSI, ist.

3. Kommunikationsvorrichtung nach Anspruch 1, die des Weiteren umfasst:

eine zweite Empfangseinheit, die in Funktion ein Signal empfangen kann, das von dem ersten Kommunikations-Endgerät (400a) zu dem zweiten Kommunikations-Endgerät (400b) gesendet wurde, wobei
die Einheit zum Steuern einer Übertragungsrate eine Übertragungsrate für ein Signal, das zu dem ersten Kommunikations-Endgerät (400a) gesendet werden soll, entsprechend dem durch die zweite Empfangseinheit empfangenen Signal bestimmt.

4. Kommunikationsvorrichtung nach Anspruch 1, wobei
die Vielzahl von Übertragungsraten mittels eines Modulationsverfahrens und eines Codierverhältnisses (encoding ratio) in einer physikalischen Schicht bestimmt werden.

5. Kommunikationsvorrichtung nach Anspruch 1, wobei
die Vielzahl von Übertragungsraten mittels eines Modulationsverfahrens, eines Codierverhältnisses, einer Frequenz-Bandbreite, einer Schutzintervall-Länge (guard interval length) und einer Anzahl von Spacial Streams in einer physikalischen Schicht bestimmt wird.

6. Kommunikationsvorrichtung, die mit einem ersten Kommunikations-Endgerät (600a) sowie einem zweiten Kommunikations-Endgerät (600b) kommuniziert, wobei die Kommunikationsvorrichtung umfasst:

eine Sendeeinheit (101, 110), die in Funktion ein Signal senden kann;
eine Empfangseinheit (101, 110), die in Funktion von dem ersten Kommunikations-End-gerät (600a) ein Steuersignal empfangen kann, das eine Empfangsqualitäts-Information enthält, wobei die Empfangsqualitäts-Information eine Empfangsqualität anzeigt, die sich auf einen Zeitpunkt bezieht, zu dem das erste Kommunikations-Endgerät (600a) ein Signal empfangen hat, das von der Sendeeinheit (101, 110) zu dem zweiten Kommunikations-Gerät (600b) gesendet wurde;
eine Einheit (109) zum Speichern einer Ausbreitungscharakteristik-Information, die in Funktion 1) eine Ausbreitungscharakteristik speichern kann, wobei die Ausbreitungscharakteristik eine Beziehung zwischen der Empfangsqualität und einer Signal-Fehlerrate in Bezug auf jede der Vielzahl von Übertragungsraten anzeigt, und 2) eine Retransmission-Raten-Information speichern kann, wobei die Retransmission-Raten-Information eine Beziehung zwischen der Signal-Fehlerrate und einer Retransmission-Rate anzeigt; sowie eine Einheit zum Steuern einer Übertragungsrate, die in Funktion eine Übertragungsrate von einer Vielzahl von Übertragungsraten für ein Signal, das zu dem ersten Kommunikations-Endgerät (600a) gesendet werden soll, entsprechend der Empfangsqualitäts-Information bestimmen kann; wobei
die Sendeeinheit (101, 110) ein Signal mit der bestimmten Übertragungsrate zu dem ersten Kommunikations-Endgerät (600a) sendet; und
die Einheit zum Steuern einer Übertragungsrate enthält:

a) eine Einheit (501) zum Schätzen einer effektiven Übertragungsgeschwindigkeit, die in Funktion eine effektive Übertragungsgeschwindigkeit beim Einsatz jeder der Vielzahl von Übertragungsraten entsprechend 1) der Empfangsqualitäts-Information, 2) der Ausbreitungscharakteristik-Information und 3) der Retransmission-Raten-Information (retransmission rate information) schätzen kann, sowie
b) eine Einheit (502) zum Bestimmen einer Übertragungsrate, die in Funktion eine Übertragungsrate für ein Signal, das zu dem ersten Kommunikations-Endgerät (600a) gesendet werden soll, so bestimmen kann, dass die geschätzte effektive Übertragungsgeschwindigkeit bei der bestimmten Übertragungsrate am höchsten wird;

**dadurch gekennzeichnet, dass**
das Steuersignal des Weiteren eine Signal-Fehlerraten-Information enthält, wobei die Signal-Fehlerraten-Information eine Signal-Fehlerrate anzeigt, die sich auf einen Zeitpunkt bezieht, zu dem das erste Kommunikations-Endgerät (600a) ein Signal empfangen hat, das zu dem zweiten Kommunikations-Endgerät (600b) gesendet wurde;
die Einheit zum Steuern einer Übertragungsrate des Weiteren enthält:

eine Einheit (336) zum Korrigieren einer Ausbreitungscharakteristik, die in Funktion die Ausbreitungscharakteristik unter Verwendung einer Kombination aus der Empfangsqualitäts-Information und der Signal-Fehlerraten-Information korrigieren kann, wobei
die Einheit (501) zum Schätzen einer effektiven Übertragungsgeschwindigkeit eine effektive Übertragungsgeschwindigkeit beim Einsatz jeder der Vielzahl von Übertragungsraten unter Verwendung einer Kombination aus der Empfangsqualitäts-Information und der Ausbreitungscharakteristik-Information schätzt.

7. Kommunikationsvorrichtung nach Anspruch 6, wobei
die Einheit (501) zum Schätzen der effektiven Übertragungsgeschwindigkeit eine Signal-Fehlerrate in Bezug auf jede der Vielzahl von Übertragungsraten jeweils unter Verwendung einer Kombination aus der Empfangsqualitäts-Information und der Ausbreitungscharakteristik-Information schätzt, eine Retransmissions-Rate in Bezug auf jede der Vielzahl von Übertragungsraten jeweils anhand der Signal-Fehlerrate schätzt, die in Bezug auf jede der Vielzahl von Übertragungsraten geschätzt wurde, und eine effektive Übertragungsgeschwindigkeit in Bezug auf jede der Vielzahl von Übertragungsraten jeweils anhand der Retransmission-Rate schätzt, die in Bezug auf jede der Vielzahl von Übertragungsraten geschätzt wurde.

**8.** Kommunikationsvorrichtung nach Anspruch 6, wobei
die Einheit (336) zum Korrigieren einer Ausbreitungscharakteristik eine Näherungslinie anhand 1) eines Istwertmessungs-Punktes, der mittels des gemessenen Empfangsqualitäts-Pegels und der gemessenen Signal-Fehlerrate ermittelt wird, und 2) einer Vielzahl von Abtastpunkten an einer Formel der aktuellen Ausbreitungscharakteristik berechnet und die aktuelle Ausbreitungscharakteristik mit der berechneten Näherungslinie unter Verwendung der Methode der kleinsten Quadrate aktualisiert.

**9.** Kommunikationsvorrichtung nach einem der Ansprüche 1 oder 6, wobei
die Einheit (336) zum Korrigieren einer Ausbreitungscharakteristik die Ausbreitungscharakteristik einer Übertragungsrate korrigiert, die für Übertragung zu dem ersten Kommunikations-Endgerät (400a, 600a) verwendet werden soll, wobei die Übertragungsrate für Übertragung zu dem zweiten Kommunikations-Endgerät (400b, 600b) verwendet worden ist.

**10.** Verfahren zum Steuern von Übertragungsraten in einer Kommunikationsvorrichtung, die mit einem ersten Kommunikations-Endgerät (400a) sowie einem zweiten Kommunikations-Endgerät (400b) kommuniziert, wobei damit in Funktion Übertragungsraten für jedes der Kommunikations-Endgeräte gesteuert werden können und das Verfahren zum Steuern von Übertragungsraten die folgenden Schritte umfasst:

Empfangen (S1801) eines Steuersignals von dem ersten Kommunikations-Endgerät (400a), wobei das Steuersignal eine Empfangsqualitäts-Information enthält und die Empfangsqualitäts-Information Empfangsqualität anzeigt, die sich auf einen Zeitpunkt bezieht, zu dem das erste Kommunikations-Endgerät (400a) ein Signal empfangen hat, das von der Kommunikationsvorrichtung zu dem zweiten Kommunikations-Endgerät (400b) gesendet wurde;
Speichern (S1804) einer Ausbreitungscharakteristik-Information, wobei die Ausbreitungscharakteristik-Information eine Beziehung zwischen einer Empfangsquaiität und einer Signal-Fehlerrate in Bezug auf jede der Vielzahl von Übertragungsraten anzeigt; und
Steuern (S1803 bis S1805) von Übertragungsraten, um eine Übertragungsrate von einer Vielzahl von Übertragungsraten für ein Signal, das zu dem ersten Kommunikations-End-gerät (400a) gesendet werden soll, entsprechend 1) der Ausbreitungscharakteristik-Information und 2) der Empfangsqualität, die in der empfangenen Empfangsqualitäts-Information enthalten ist, so zu bestimmen, dass die bestimmte Übertragungsrate von allen Übertragungsraten, bei denen die der Empfangsqualität entsprechende Signal-Fehlerrate kleiner oder gleich einem vorgegebenen Schwellenwert ist, am höchsten ist;
**dadurch gekennzeichnet, dass**
das Steuersignal des Weiteren eine Signal-Fehlerraten-Information enthält, wobei die Signal-Fehlerraten-Information eine Signal-Fehlerrate anzeigt, die sich auf einen Zeitpunkt bezieht, zu dem das erste Kommunikations-Endgerät (400a) ein Signal empfangen hat, das zu dem zweiten Kommunikations-Endgerät (400b) gesendet wurde;
der Schritt des Steuerns (S1803 bis S1805) von Übertragungsraten des Weiteren die folgenden Schritte einschließt:

Korrigieren (S1804) der Ausbreitungscharakteristik-Information entsprechend 1) der Empfangsqualitäts-Information und 2) der Signal-Fehlerraten-Information, die beide in dem empfangenen Steuersignal enthalten sind; und
Bestimmen einer Übertragungsrate für ein Signal, das zu dem ersten KommunikationsEndgerät (400a) gesendet werden soll, entsprechend 1) einer Empfangsqualitäts-Information, die in einem neu empfangenen Steuersignal enthalten ist, und 2) der korrigierten Ausbreitungscharakteristik-Information.

**11.** Computerprogramm zum Steuern von Übertragungsraten, das Computerprogramm-Codemittel umfasst, die zum Durchführen der Schritte des Verfahrens nach Anspruch 10 beim Ausführen des Programms auf einem Computer eingerichtet sind.

**Revendications**

**1.** Dispositif de communication communiquant avec un premier terminal de communication (400a) et un second terminal de communication (400b), le dispositif de communication comprenant :

- une unité de transmission (101, 110) utilisable pour transmettre un signal ;
- une unité de réception (101, 110) utilisable pour recevoir, du premier terminal de communication (400a), un signal de commande incluant des informations de qualité de réception, les informations de qualité de réception montrant une qualité de réception relative à un temps où le premier terminal de communication (400a) reçut un signal ayant été transmis de l'unité de transmission (101, 110) au second terminal de communication (400b) ;

- une unité de maintien de caractéristiques de propagation (109) utilisable pour maintenir des informations de caractéristiques de propagation, les informations de caractéristiques de propagation montrant une relation entre une qualité de réception et un débit d'erreur de signal, par rapport à chaque débit d'une pluralité de débits de transmission ; et

- une unité de commande de débit de transmission incluant une unité de détermination de débit de transmission (112) utilisable pour déterminer un débit de transmission parmi la pluralité de débits de transmission pour un signal à transmettre au premier terminal de communication (400a), suivant : i) les informations de caractéristiques de propagation et ii) la qualité de réception contenue dans les informations de qualité de réception reçues par l'unité de réception (101, 110), de sorte que le débit de transmission déterminé soit le plus rapide parmi tous les débits de transmission auxquels le débit d'erreur de signal correspondant à la qualité de réception est inférieur ou égal à une valeur seuil prédéterminée ; dans lequel :

- l'unité de transmission (101, 110) transmet un signal au premier terminal de communication (400a) au débit de transmission déterminé ; et

- **caractérisé en ce que** :

- le signal de commande inclut, en outre, des informations de débit d'erreur de signal, les informations de débit d'erreur de signal montrant un débit d'erreur de signal relatif à un temps où le premier terminal de communication (400a) reçut un signal ayant été transmis au second terminal de communication (400b) ;

- l'unité de commande de débit de transmission inclut, en outre, une unité de correction de caractéristiques de propagation (336) utilisable pour corriger les informations de caractéristiques de propagation, suivant : i) les informations de qualité de réception et ii) les informations de débit d'erreur de signal, toutes deux contenues dans le signal de commande reçu par l'unité de réception (101, 110) ; et

- l'unité de détermination de débit de transmission (112) détermine un débit de transmission pour un signal à transmettre au premier terminal de communication (400a), suivant : i) les informations de qualité de réception contenue dans un signal de commande nouvellement reçu par l'unité de réception et ii) les informations de caractéristiques de propagation corrigées.

2. Dispositif de communication selon la revendication 1, dans lequel :

- la qualité de réception est une indication de force de signal reçu (Received Signal Strength Indication), RSSI.

3. Dispositif de communication selon la revendication 1, dans lequel :

- une seconde unité de réception est utilisable pour recevoir un signal ayant été transmis du premier terminal de communication (400a) au second terminal de communication (400b), dans lequel ;

- l'unité de commande de débit de transmission détermine un débit de transmission pour un signal à transmettre au premier terminal de communication (400a), suivant le signal reçu par la seconde unité de réception.

4. Dispositif de communication selon la revendication 1, dans lequel :

- la pluralité de débits de transmission est obtenue par un procédé de modulation et un rapport de codage (encoding ration) dans une couche physique (physical layer).

5. Dispositif de communication selon la revendication 1, dans lequel :

- la pluralité de débits de transmission est déterminée par un procédé de modulation, un rapport de codage, une largeur de bande de fréquence (guard interval length), une longueur d'intervalle de garde et un nombre de flux spatiaux dans une couche physique.

6. Dispositif de communication communiquant avec un premier terminal de communication (600a) et un second terminal de communication (600b), le dispositif de communication comprenant :

- une unité de transmission (101, 110) utilisable pour transmettre un signal ;

- une unité de réception (101, 110) utilisable pour recevoir, du premier terminal de communication (600a), un signal de commande incluant des informations de qualité de réception, les informations de qualité de réception montrant une qualité de réception relative à un temps où le premier terminal de communication (600a) reçut un signal ayant été transmis de l'unité de transmission (101, 110) au second terminal de communication (600b) ;

- une unité de maintien d'informations de caractéristiques de propagation (109) utilisable pour maintenir : i) des caractéristiques de propagation, les caractéristiques de propagation montrant une relation entre la qualité de réception et un débit d'erreur de signal, par rapport à chaque débit d'une pluralité de débits de transmission et ii) des informations de débit de retransmission, les informations de débit de retransmission montrant une relation entre le débit d'erreur de signal et un débit de retransmission ; et
- une unité de commande de débit de transmission utilisable pour déterminer un débit de transmission parmi la pluralité de débits de transmission pour un signal à transmettre au premier terminal de communication (600a), suivant les informations de qualité de réception ; dans lequel :
- l'unité de transmission (101, 110) transmet un signal au premier terminal de communication (600a) au débit de transmission déterminé ; et
- l'unité de commande de débit de transmission inclus :

a) une unité d'estimation de vélocité de transmission effective (501) utilisable pour estimer une vélocité de transmission effective lorsque chaque débit de la pluralité de débits de transmission est utilisé respectivement, suivant : i) les informations de qualité de réception, ii) les informations de caractéristiques de propagation et iii) les informations de débit de retransmission ; et

b) une unité de détermination de débit de transmission (502) utilisable pour déterminer un débit de transmission pour un signal à transmettre au premier terminal de communication (600a), de sorte que la vélocité de transmission effective estimée devienne la plus rapide au débit de transmission déterminé ;

- **caractérisé en ce que** :
- le signal de commande inclut, en outre, des informations de débit d'erreur de signal, les informations de débit d'erreur de signal montrant un débit d'erreur de signal relatif à un temps où le premier terminal de communication (600a) reçut un signal ayant été transmis au second terminal de communication (600b) ;
- l'unité de commande de débit de transmission inclut, en outre :
- une unité de correction de caractéristiques de propagation (336) utilisable pour corriger les caractéristiques de propagation, en utilisant une combinaison des informations de qualité de réception et des informations de débit d'erreur de signal, dans lequel :
- l'unité d'estimation de vélocité de transmission effective (501) estime une vélocité de transmission effective lorsque chaque débit de la pluralité de débits de transmission est utilisé respectivement, en utilisant une combinaison des informations de qualité de réception et des informations de caractéristiques de propagation.

7. Dispositif de communication selon la revendication 6, dans lequel :

- l'unité d'estimation de vélocité de transmission effective (501) estime un débit d'erreur de signal par rapport à chaque débit de la pluralité de débits de transmission respectivement, en utilisant une combinaison des informations de qualité de réception et des informations de caractéristiques de propagation, estime un débit de retransmission par rapport à chaque débit de la pluralité de débits de transmission respectivement, à partir du débit d'erreur de signal ayant été estimé par rapport à chaque débit de la pluralité de débits de transmission, et estime une vélocité de transmission effective par rapport à chaque débit de la pluralité de débits de transmission respectivement, à partir du débit de retransmission ayant été estimé par rapport à chaque débit de la pluralité de débits de transmission.

8. Dispositif de communication selon la revendication 6, dans lequel :

- l'unité de correction de caractéristiques de propagation (336) calcule une ligne approximative à partir de : i) un point de mesure réel obtenu par le niveau de qualité de réception mesuré et le débit d'erreur de signal mesuré, et ii) une pluralité de points d'échantillonnage (sampling points) sur une formule des caractéristiques de propagation actuelles, et met à jour les caractéristiques de propagation actuelles par la ligne approximative calculée à l'aide du procédé des moindres carrés.

9. Dispositif de communication selon l'une quelconque des revendications 1 à 6, dans lequel :

- l'unité de correction de caractéristiques de propagation (336) corrige les caractéristiques de propagation d'un débit de transmission à utiliser pour une transmission au premier terminal de communication (400a, 600a), le débit de transmission ayant été utilisé pour une transmission au second terminal de communication (400b, 600b).

10. Procédé de commande de débit de transmission dans un dispositif de communication communiquant avec un premier terminal de communication (400a) et un second terminal de communication (400b), utilisable pour commander des débits de transmission pour chacun des terminaux de communication, le procédé de commande de débit de transmission comprenant les étapes consistant à

- recevoir (S1801) un signal de commande du premier terminal de communication (400a), le signal de commande incluant des informations de qualité de réception, les informations de qualité de réception montrant une qualité de réception relative à un temps où le premier terminal de communication (400a) reçut un signal ayant été transmis du dispositif de communication au second terminal de communication (400b) ;

- maintenir (S1804) des informations de caractéristiques de propagation, les informations de caractéristiques de propagation montrant une relation entre une qualité de réception et un débit d'erreur de signal, par rapport à chaque débit d'une pluralité de débits de transmission ; et

- commander (S1803 à S1805) des débits de transmission pour déterminer un débit de transmission parmi la pluralité de débits de transmission pour un signal à transmettre au premier terminal de communication (400a), suivant : i) les informations de caractéristiques de propagation et ii) la qualité de réception contenue dans les informations de qualité de réception reçues, de sorte que le débit de transmission déterminé soit le plus rapide parmi tous les débits de transmission auxquels le débit d'erreur de signal correspondant à la qualité de réception est inférieur ou égal à une valeur seuil prédéterminée ;

- **caractérisé en ce que** :

- le signal de commande inclut, en outre, des informations de débit d'erreur de signal, les informations de débit d'erreur de signal montrant un débit d'erreur de signal relatif à un temps où le premier terminal de communication (400a) reçut un signal ayant été transmis au second terminal de communication (400b) ;

- l'étape de commande (S1803 à S1805) de débits de transmission inclut, en outre, les étapes consistant à :

- corriger (S1804) les informations de caractéristiques de propagation, suivant : i) les informations de qualité de réception et ii) les informations de débit d'erreur de signal, toutes deux contenues dans le signal de commande reçu ; et

- déterminer un débit de transmission pour un signal à transmettre au premier terminal de communication (400a), suivant : i) les informations de qualité de réception contenue dans un signal de commande nouvellement reçu et ii) les informations de caractéristiques de propagation corrigées.

11. Programme informatique de commande de débit de transmission comprenant des moyens de codage de programme informatique adaptés à mettre en oeuvre les étapes du procédé selon la revendication 10 lorsque ledit programme est exécuté sur un ordinateur.

FIG. 1

AP ～100

STA ～200a

STA ～200b

Identical BSS

FIG. 2

EP 2 173 049 B1

FIG. 3

AP ⌒100

Packet signal
addressed to
STA 200b

Packet signal
addressed to
STA 200b

STA ⌒200a

STA ⌒200b

Identical BSS

EP 2 173 049 B1

FIG. 4

EP 2 173 049 B1

FIG. 5

FIG. 5

FIG. 6

## FIG. 7

| MAC Header | Frame Body | CRC |
|---|---|---|

| Identification information | Reception identification flag | SA | DA | RSSI |
|---|---|---|---|---|

# FIG. 8

| Destinations | PHY rates |
|:---:|:---:|
| STA200a | 36Mbps |
| STA200b | 24Mbps |
| ⋮ | ⋮ |

800    801    802

## FIG. 9

STA200a — AP100 — STA200b

S901 Transmit signal to STA 200a

S902 Receive signal, detect RSSI

S905 Receive signal to STA 200a, detect RSSI

S903 Generate and transmit state notice frame

S904 Determine PHY rate to STA 200a

S906 Generate and transmit state notice frame

S907 Determine PHY rate to STA 200b

S908 Transmit signal to STA 200b

S909 Receive signal, detect RSSI

S912 Receive signal to STA 200b, detect RSSI

S910 Generate and transmit state notice frame

S911 Determine PHY rate to STA 200b

S913 Generate and transmit state notice frame

S914 Determine PHY rate to STA 200a

# FIG. 10

```
        ┌─────────────────┐
        │      Start       │
        └─────────────────┘
                 │
                 │        S1001
        ┌─────────────────┐
        │ Receive state notice frame │
        └─────────────────┘
                 │
                 │        S1002
        ┌─────────────────┐
        │ Extract reception intensity │
        │   from state notice frame   │
        └─────────────────┘
                 │
                 │        S1003
        ┌─────────────────┐
        │ Determine PHY rate from     │
        │ propagation characteristics │
        │   and reception intensity   │
        └─────────────────┘
                 │
                 │        S1004
        ┌─────────────────┐
        │ Store determined PHY rate   │
        │   as PHY rate for STA which │
        │ transmitted state notice frame │
        └─────────────────┘
                 │
        ┌─────────────────┐
        │       End        │
        └─────────────────┘
```

## FIG. 11

```
            ┌──────────────┐
            │    Start     │
            └──────┬───────┘
                   │
                   │            S1101
            ┌──────┴───────┐
            │ Receive signal│
            └──────┬───────┘
                   │
                   │            S1102
     ┌─────────────┴──────────────┐
     │ Measure reception intensity │
     └─────────────┬──────────────┘
                   │
                   │            S1103
         ┌─────────┴──────────┐
         │ Generate and transmit│
         │  state notice frame │
         └─────────┬──────────┘
                   │
                   │            S1104
              ◇────┴────◇
            MAC address        NO
         designating own ──────────┐
              device?              │
              ◇────┬────◇          │
                 YES               │
                   │               │
          S1105    │               │   S1106
     ┌─────────────┴──┐    ┌───────┴────────┐
     │Execute processing│    │  Delete data   │
     │ in accordance with│    │of received signal│
     │  received signal │    └───────┬────────┘
     └─────────────┬──┘             │
                   │◄───────────────┘
                   │
            ┌──────┴───────┐
            │     End      │
            └──────────────┘
```

FIG. 12

AP 300

STA 400b

STA 400a

Identical BSS

FIG. 13

EP 2 173 049 B1

FIG. 14

EP 2 173 049 B1

FIG. 15

| MAC Header | Frame Body | CRC |
|---|---|---|

| Identification information | Reception identification flag | SA | DA | RSSI | PER | PHY Rate | Length | Count |
|---|---|---|---|---|---|---|---|---|

FIG. 16

## FIG. 17

```
        STA400a              AP300                STA400b

                      ┌────────────────┐  ⟋S1701
                      │ Transmit signal │
                      │  to STA 400a    │
                      └────────────────┘
  ┌──────────────┐ ⟋S1702                        ⟋S1705
  │Receive signal,│                      ┌──────────────┐
  │ detect RSSI   │                      │Receive signal │
  └──────────────┘                       │ to STA 400a,  │
  ┌──────────────┐ ⟋S1703               │ detect RSSI   │
  │Generate and transmit│                └──────────────┘
  │ state notice frame  │  ⟋S1704
  └──────────────┘
                   ┌──────────────────┐
                   │Determine PHY rate to│
                   │STA 400a and correct │        ⟋S1706
                   │   propagation       │  ┌──────────────┐
                   │  characteristics    │  │Generate and transmit│
                   └──────────────────┘   │ state notice frame  │
                   ┌──────────────────┐  └──────────────┘
                   │Determine PHY rate to│
                   │STA 400b and correct │ ⟋S1707
                   │   propagation       │
                   │  characteristics    │
                   └──────────────────┘
```

# FIG. 18

```
           ( Start )

                         S1801
   ┌─────────────────────────┐
   │  Receive state notice frame  │
   └─────────────────────────┘

                         S1802
   ┌─────────────────────────┐
   │   Extract reception intensity  │
   │    from state notice frame    │
   └─────────────────────────┘

                         S1803
   ┌─────────────────────────┐
   │  Determine PHY rate from propagation  │
   │ characteristics and reception intensity │
   └─────────────────────────┘

                         S1804
   ┌─────────────────────────┐
   │    Correct stored propagation    │
   │  characteristics from reception intensity │
   │   and PER actual measurement values  │
   └─────────────────────────┘

                         S1805
   ┌─────────────────────────┐
   │ Store determined PHY rate and corrected │
   │  propagation characteristics as PHY rate │
   │  and propagation characteristics for STA │
   │   which transmitted state notice frame  │
   └─────────────────────────┘

            (  End  )
```

FIG. 19

EP 2 173 049 B1

AP — 500

STA — 600a

STA — 600b

Identical BSS

# FIG. 20

EP 2 173 049 B1

FIG. 21

FIG. 22

EP 2 173 049 B1

# FIG. 23

```
                    ┌─────────────┐
                    │    Start    │
                    └──────┬──────┘
                           │           ╱ S2301
        ┌──────────────────┴──────────────────┐
        │      Receive state notice frame      │
        └──────────────────┬──────────────────┘
                           │           ╱ S2302
        ┌──────────────────┴──────────────────┐
        │        Read out propagation          │
        │       characteristics of PHY rate    │
        └──────────────────┬──────────────────┘
                           │           ╱ S2303
        ┌──────────────────┴──────────────────┐
        │             Estimate PER             │
        └──────────────────┬──────────────────┘
                           │           ╱ S2304
        ┌──────────────────┴──────────────────┐
        │           Estimate surplus           │
        └──────────────────┬──────────────────┘
                           │           ╱ S2305
        ┌──────────────────┴──────────────────┐
        │         Estimate throughput          │
        └──────────────────┬──────────────────┘
                           │           ╱ S2306
          NO      ◇────────┴────────◇
        ┌─────────  Estimation done
        │           for all PHY rate? ◇
        │              │ YES
        │              │           ╱ S2307
        │   ┌──────────┴──────────┐
        │   │ Select PHY rate at which
        │   │  throughput is highest │
        │   └──────────┬──────────┘
        │              │           ╱ S2308
        │   ┌──────────┴──────────┐
        │   │   Store selected PHY rate
        │   │   as PHY rate for STA which
        │   │  transmitted state notice frame
        │   └──────────┬──────────┘
                    ┌──┴───┐
                    │ End  │
                    └──────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005244598 A
- WO 2006085801 A